Europäisches Patentamt

European Patent Office

Office européen des brevets

(19)

(11) Numéro de publication : **0 381 102 B1**

(12) **FASCICULE DE BREVET EUROPEEN**

(45) Date de publication du fascicule du brevet :
24.08.94 Bulletin 94/34

(51) Int. Cl.⁵ : **H04J 14/02, H04Q 11/00**

(21) Numéro de dépôt : **90101694.9**

(22) Date de dépôt : **29.01.90**

(54) **Réseau de communication sur fibres optiques avec multiplexage en fréquence.**

(30) Priorité : **03.02.89 FR 8901414**

(43) Date de publication de la demande :
**08.08.90 Bulletin 90/32**

(45) Mention de la délivrance du brevet :
**24.08.94 Bulletin 94/34**

(84) Etats contractants désignés :
**AT BE CH DE ES FR GB IT LI NL SE**

(56) Documents cités :
**EP-A- 0 077 292**
**EP-A- 0 281 306**
**EP-A- 0 298 598**
**PROCEEDINGS OF THE EUROPEAN CONFE-
RENCE ON OPTICAL COMMUNICATIONS -
ECOC'87, Helsinki, 13-17 septembre 1987, vol.
1, pages 317-330, CPEF, Helsinki, NO; Ch.
CASPAR et al.: "Automatic switching system
in optical heterodyne technique"
ELECTRONICS LETTERS, vol. 22, no. 19, septembre 1986, pages 1002-1003,Stevenage,
Herts, GB; E.-J. BACHUS et al.: "Ten-channel
coherent optical fibre transmission"**

(73) Titulaire : **ALCATEL N.V.
Strawinskylaan 341,
(World Trade Center)
NL-1077 XX Amsterdam (NL)**

(72) Inventeur : **Gabriagues, Jean.Michel
2bis, Allée des Tilleuls
F-91290 La Norville (FR)**
Inventeur : **Guillon, Jean
53, avenue du parc des Sports
F-94260 Fresnes (FR)**
Inventeur : **Jacquinot, Jean-Claude
35, rue Séverine
F-94270 Le Kremlin-Bicetre (FR)**
Inventeur : **Sotom, Michel
10, rue du Bas de la Ferme
F-91140 Villebon sur Yvette (FR)**

(74) Mandataire : **Weinmiller, Jürgen et al
Lennéstrasse 9
Postfach 24
D-82336 Feldafing (DE)**

## Description

La présente invention concerne la réalisation d'un réseau de communication sur fibres optiques. Un réseau selon l'invention peut comporter certains éléments qui lui sont alors communs avec un réseau connu et qui vont d'abord être indiqués :

- des terminaux associés à des périphériques pour permettre la transmission d'informations entre ces périphériques, chacun de ces terminaux étant apte à être tantôt appelant, tantôt appelé, tantôt en attente, un terminal étant appelant pour émettre un message aller portant une dite information, cette information étant à transmettre à un terminal appelé sous la forme d'une modulation sur une onde porteuse optique présentant une fréquence aller, ce terminal appelant étant alors en émission, ce terminal appelé étant apte à recevoir ce message aller et étant alors en réception, (étant entendu que, dans le cas où la transmission est réalisée dans le mode dit "duplex", le terminal appelé est apte à émettre, en réponse au message aller, un message retour portant une autre dite information à transmettre au terminal appelant sous la forme d'une modulation sur une onde porteuse optique présentant une fréquence retour qui est aussi une dite fréquence permise, ce terminal appelé étant alors en émission, et ce terminal appelant étant apte ensuite à recevoir ce message retour, ce terminal appelant étant alors en réception).
- deux fibres optiques monomodes pour chacun desdits terminaux, ces fibres étant une fibre d'émission et une fibre de réception pour l'émission et la réception desdits messages par ce terminal, respectivement,
- un coupleur en étoile pour recevoir lesdites ondes porteuses lui parvenant de tous lesdits terminaux par lesdites fibres d'émission, et pour transmettre chacune de ces ondes porteuses vers tous ces terminaux par lesdites fibres de réception, de sorte que toutes lesdites ondes porteuses sont reçues par chaque dit terminal,
- et un générateur d'accordage émettant des ondes d'accordage qui sont, elles aussi, reçues par tous lesdits terminaux pour définir une succession de fréquences permises dont chacune peut être choisie pour constituer une dite fréquence aller chaque fois qu'un dit message aller doit être transmis, de manière que lesdits terminaux appelant et appelé soient alors accordés sur une même fréquence, cette fréquence étant alors occupée, les fréquences permises non occupées restant disponibles pour la transmission d'autres messages,
- les divers dits terminaux comportant respectivement des éléments semblables qui sont, pour un terminal considéré qui est l'un quelconque de ces terminaux :

- un émetteur commandable pour émettre une dite onde porteuse sur ladite fibre d'émission lorsqu'un message doit être émis par le terminal considéré et pour réaliser ladite modulation de cette onde, la fréquence de cette onde étant commandable et constituant une fréquence d'émission de ce terminal,
- un oscillateur local pour fournir une onde locale optique à fréquence locale commandable,
- un mélangeur d'hétérodynage à deux entrées recevant d'une part, sur une entrée de réception, lesdites ondes porteuses reçues par le terminal considéré, une telle onde constituant une onde de réception avec une fréquence de réception pour ce terminal lorsque le message porté par cette onde est à transmettre à ce terminal, ce mélangeur recevant, d'autre part, ladite onde locale sur une entrée locale et mélangeant cette onde avec lesdites ondes reçues, ce mélangeur étant pourvu d'un récepteur photodétecteur pour former notamment, par mélange avec ladite onde de réception et par photodétection, un signal de battement de réception de nature non optique, à une fréquence intermédiaire prédéterminée ($F_I$) qui est la différence entre lesdites fréquences de réception et locale,
- un filtre d'hétérodynage accordé sur ladite fréquence intermédiaire pour sélectionner ce signal de battement de réception,
- un circuit de démodulation pour recevoir ce signal de battement de réception, pour le démoduler, et pour fournir un signal démodulé représentatif d'une dite information qui était à transmettre au terminal considéré et qui était portée par ladite onde de réception,
- et un circuit de commande, ce circuit étant relié audit périphérique associé au terminal considéré pour en recevoir ladite information à transmettre, ce circuit commandant en conséquence ledit émetteur pour réaliser ladite modulation de l'onde porteuse lorsque le terminal considéré est en émission, ce circuit recevant ledit signal démodulé et transmettant en conséquence ladite information reçue audit périphérique associé lorsque le terminal considéré est en réception, ce circuit commandant ladite fréquence d'émission avec l'aide desdites ondes d'accordage lorsque le terminal considéré est appelant et en émission, cette fréquence d'émission étant choisie parmi lesdites fréquences disponibles, et ce circuit commandant ladite fréquence locale en fonction de ladite fréquence de réception lorsque le terminal considéré est appelé et en réception, de manière que la différence entre cette fréquence locale et cette fréquence de réception soit égale à ladite fréquence intermédiaire prédéterminée.

Ce réseau connu est décrit dans le document de brevet EP-A-0 077 292 "Réseau de communications utilisant des fibres monomodes comme moyen de transmission pour les canaux optiques multiplexés dans le domaine des fréquences d'ondes optiques porteuses". Son générateur d'accordage doit émettre lesdites ondes d'accordage sur toutes lesdites fréquences permises et il doit donc comporter des moyens pour assurer une stabilisation précise de chacune de ces fréquences.

A titre de solution alternative il apparaît possible, pour ne pas utiliser de système centralisé de synchronisation tel que le générateur d'accordage de ce réseau connu, de munir chaque terminal de moyens de stabilisation pour chacune des fréquences permises. Mais ceci rendrait la réalisation du réseau encore plus complexe.

La présente invention a notamment pour but de permettre une réalisation plus simple d'un réseau de communication performant.

Outre les éléments communs précédemment indiqués, le réseau selon l'invention peut présenter les caractéristiques inventives suivantes :

Ledit terminal considéré comporte des moyens d'incrémentation de fréquence propres à effectuer des opérations d'incrémentation consistant chacune à engendrer une onde optique à une fréquence présentant un incrément de fréquence à partir de la fréquence d'une dite onde reçue par ce terminal, cet incrément de fréquence étant commun aux divers dits terminaux de manière que ces opérations d'incrémentation définissent, à partir d'une fréquence de base qui est elle-même définie par lesdites ondes d'accordage, une succession régulière de dites fréquences permises séparées par cet incrément de fréquence, une fréquence permise suivante étant définie par une telle opération d'incrémentation effectuée dans le terminal considéré à partir d'une fréquence permise précédente occupée par un autre terminal,

- ledit circuit de commande coopérant avec ces moyens d'incrémentation de fréquence, lorsque le terminal considéré doit passer en émission, pour définir une dite fréquence disponible, ce circuit commandant alors ladite fréquence d'émission pour la rendre égale à la fréquence disponible ainsi définie.

Lesdits moyens d'incrémentation de fréquence comportent :
- un générateur d'exploration pour engendrer une onde d'exploration à une fréquence optique commandable,
- un générateur de balayage commandé par ledit circuit de commande et commandant ledit générateur d'exploration pour faire balayer une plage des fréquences du réseau par la fréquence de ladite onde d'exploration,
- un mélangeur d'incrémentation muni d'un récepteur photodétecteur pour recevoir, d'une part, lesdites ondes reçues par le terminal considéré et, d'autre part, ladite onde d'exploration, et pour mélanger ces ondes reçues avec cette onde d'exploration de manière à former un signal de battement de balayage de nature non optique à des fréquences différentielles,
- et un système de repérage de fréquence recevant ledit signal de battement de balayage et fournissant un signal de repérage de fréquence audit circuit de commande quand la fréquence de ce signal de battement passe par au moins une fréquence propre à ce système de repérage de fréquence et liée audit incrément de fréquence, de manière à permettre à ce circuit de commande, à partir de ces signaux de repérage, de commander une dite fréquence d'émission pour la rendre égale à une dite fréquence disponible.

Ledit système de repérage de fréquence comporte au moins un filtre de fréquence et/ou une horloge, une fréquence de ce filtre et/ou de cette horloge constituant une dite fréquence propre de ce système de repérage.

Ledit système de repérage possède un groupe de fréquences propres qui est constitué d'au moins une fréquence et à partir duquel ledit incrément de fréquence est défini par des opérations d'addition, de soustraction et/ou d'égalité de fréquences.

Ce groupe de fréquences propres comporte ladite fréquence intermédiaire et l'intervalle entre cette fréquence intermédiaire et ledit incrément de fréquence.

Ledit générateur d'exploration et ledit mélangeur d'incrémentation sont constitués par ledit oscillateur local et par ledit mélangeur d'hétérodynage, ledit terminal considéré comportant en outre un groupe de coupleurs directionnels commandés par ledit circuit de commande pour permettre à ce circuit de diriger l'onde émise par ledit émetteur soit vers ladite entrée de réception du mélangeur d'hétérodynage soit vers ladite fibre d'émission, et de diriger vers cette entrée soit lesdites ondes reçues par le terminal considéré, soit l'onde émise par ledit émetteur.

Dans le cas d'une transmission en duplex ladite fréquence retour est adjacente à ladite fréquence aller dans ladite succession de fréquences permises, cette succession comportant alternativement desdites fréquences aller et desdites fréquences retour et étant en même temps une succession de canaux constitués chacun de deux fréquences qui sont une dite fréquence aller pour un dit message aller et une dite fréquence retour pour un dit message retour émis en réponse à ce message aller, chaque dit canal étant disponible seulement lorsque ses deux dites fréquences aller et retour sont disponibles.

Ledit système de repérage comporte alors :

- une horloge pour fournir un signal d'horloge à une fréquence d'horloge qui est une dite fréquence propre et qui est proportionnelle audit incrément de fréquence,
- un mélangeur de repérage pour mélanger ce signal d'horloge à un signal issu dudit mélangeur d'hétérodynage et fournir un signal de mélange de repérage,
- et des filtres de repérage ayant desdites fréquences propres dont les valeurs sont définies par des opérations d'addition, de soustraction ou d'égalité à partir de ladite fréquence d'horloge dudit incrément de fréquence et de ladite fréquence intermédiaire, chacun de ces filtres fournissant un dit signal de repérage de fréquence lorsqu'un signal qu'il reçoit passe par sa fréquence propre.

Lesdits filtres de repérage de fréquence comportent :

- ledit filtre d'hétérodynage dont ladite fréquence propre est ladite fréquence intermédiaire,
- un filtre de recherche de canal qui reçoit ledit signal de mélange de repérage et dont ladite fréquence propre est, elle aussi, égale à ladite fréquence intermédiaire, ledit circuit de commande étant prévu pour rendre ladite fréquence d'émission égale à la fréquence aller d'un canal disponible en réponse aux dits signaux de repérage lorsqu'un dit message aller doit être émis par ledit terminal considéré,
- et un filtre de repérage de fréquence de réponse dont la fréquence propre ($F_H$ - $F_I$) est égale à la différence entre ledit incrément de fréquence ($F_H$) et ladite fréquence intermédiaire ($F_I$), ledit circuit de commande étant prévu, lorsqu'un dit message aller est transmis sur une dite onde porteuse à ladite fréquence aller, pour accorder ledit oscillateur local ou ledit émetteur de manière à recevoir ou émettre ledit message retour sur une onde porteuse à une dite fréquence retour appartenant au même dit canal que ladite fréquence aller.

Ledit générateur d'accordage émet deux ondes dont les fréquences sont des fréquences bornes aux deux extrémités d'une plage des fréquences du réseau comportant les dites fréquences permises.

A l'aide des figures schématiques ci-jointes, on va décrire plus particulièrement ci-après, à titre d'exemple non limitatif, comment la présente invention peut être mise en oeuvre dans le cadre de l'exposé qui en a été donné ci-dessus. Lorsqu'un même élément est représenté sur plusieurs figures il y est désigné par le même signe de référence. Les modes de mise en oeuvre donnés en exemple comportent les caractéristiques inventives mentionnées ci-dessus. Il doit être compris que les éléments mentionnés peuvent être rmeplacés par d'autres éléments assurant les mêmes fonctions techniques.

La figure 1 représente le spectre des ondes optiques qui seraient véhiculées dans un réseau simplifié qui fonctionnerait en alternat et qui mettraient en oeuvre certaines des dispositions de la présente invention, les fréquences étant portées en abscisses.

La figure 2 représente les fonctions de transfert de deux filtres utilisés dans ce réseau simplifié, les fréquences étant portées en abscisses.

La figure 3 représente partiellement un terminal de ce réseau simplifié.

La figure 4 représente le spectre des ondes optiques véhiculées dans un réseau réalisé selon la présente invention et fonctionnant en duplex, les fréquences étant portées en abscisses. Les figures suivantes se rapportent à ce réseau.

La figure 5 représente partiellement un terminal qui pourraient être utilisé dans ce réseau.

La figure 6 représente une vue d'ensemble de ce réseau, seuls deux terminaux de ce réseau étant représentés.

La figure 7 représente plus en détails un terminal faisant effectivement partie de ce réseau.

La figure 8 représente un générateur d'accordage de ce réseau.

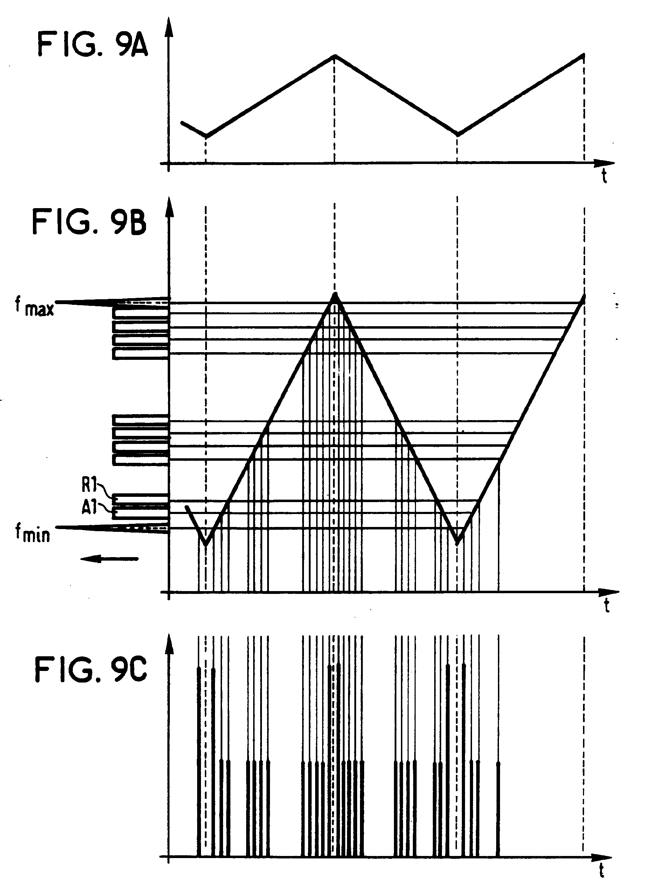

Les figures 9A, 9B et 9C représentent des diagrammes temporels, le temps étant porté en abscisses, les grandeurs suivantes étant portées en ordonnées: sur la figure 9A le courant d'accord d'un oscillateur local, sur la figure 9B une fréquence de balayage, et, sur la figure 9C l'intensité de signaux de repérage de fréquence. Sur la figure 9B sont en outre représentés, à gauche de l'axe des ordonnées, les fréquences minimales et maximales du réseau et des voies spectrales aller et retour centrées sur les fréquences permises du réseau, ainsi que certains canaux constitués chacun par deux telles voies, les fréquences étant portées en ordonnées.

Les figures 10, 11, 12, 13 et 14 représentent un terminal appelant respectivement en mode d'attente pendant la recherche d'un canal disponible, pendant le réglage de la fréquence aller, pendant le réglage de la fréquence locale, et pendant l'envoi du message d'appel, les éléments des terminaux qui sont essentiels pour ces opérations étant seuls représentés en trait plein.

Les figures 15, 16 et 17 représentent un terminal appelé respectivement pendant la détection d'un appel, pendant le réglage de la fréquence retour, et pendant l'envoi d'un message d'acquittement, les éléments des terminaux qui sont essentiels pour ces opérations étant seuls représentés en trait plein.

La figure 18 représente des diagrammes temporels de variation de fréquences, le temps étant porté en abscisses et les fréquences en ordonnées.

Le fonctionnement d'un réseau tel que le réseau connu précédemment décrit ou un réseau selon l'invention repose sur le principe de l'allocation d'une fréquence optique porteuse ou d'une paire de telles fréquences formant un "canal" pour la transmission de signaux modulés entre deux terminaux. Chaque émetteur peut être accordé sur l'un des canaux de transmission disponibles et l'oscillateur local du terminal appelé est accordé pour sélectionner en réception le canal de transmission choisi.

Le problème essentiel à résoudre pour assurer le bon fonctionnement d'un tel réseau est le mode d'attribution des canaux de transmission.

D'une part, chaque terminal appelant doit être capable de s'accorder sur un canal de transmission disponible et de s'assurer que le terminal appelé n'est pas occupé par un autre échange d'informations pour éviter le risque d'une "collision", (quoique les moyens pour éviter un tel risque ne soit pas décrits ci-après il doit être compris que les terminaux du réseau selon l'invention comportent de tels moyens). D'autre part, un terminal appelé doit être capable de détecter l'appel, de se mettre en condition de recevoir des signaux provenant du terminal appelant.

Selon la présente invention chaque terminal d'un réseau est capable d'accorder sa fréquence porteuse optique d'émission et de réception sans disposer à cette fréquence d'une référence interne au terminal ou extérieure à lui.

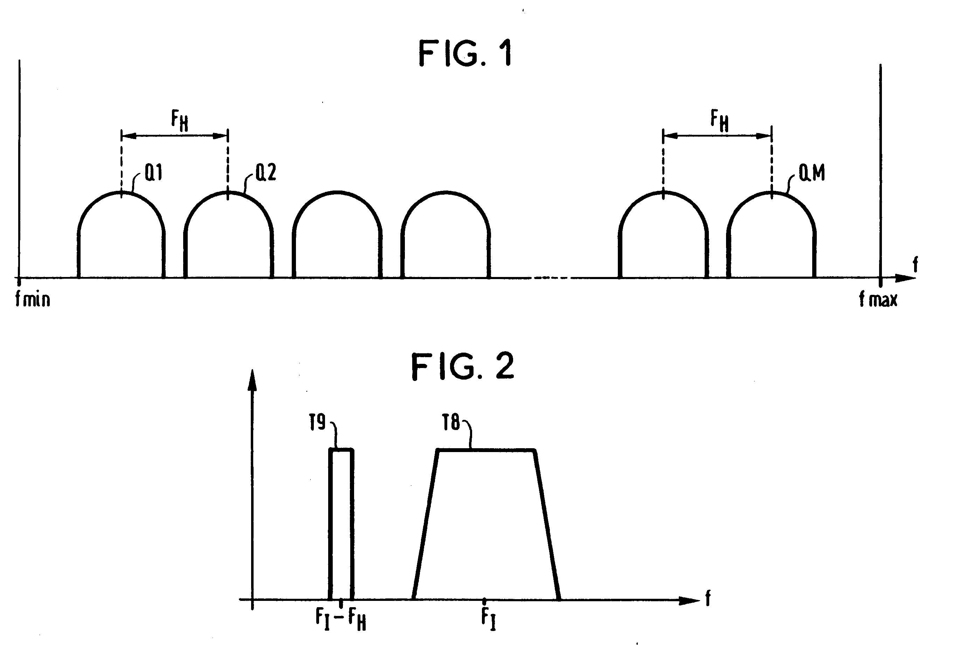

Selon la figure 1 le spectre optique des ondes véhiculées par un réseau simplifié est composé essentiellement de signaux modulés occupant des canaux de transmission Q1, Q2....QM qui se succèdent les uns aux autres avec un incrément de fréquence $F_H$.

Le spectre peut comporter en outre un ou deux signaux optiques de référence de fréquences f min et f max aux deux extrémités de la plage des fréquences permises.

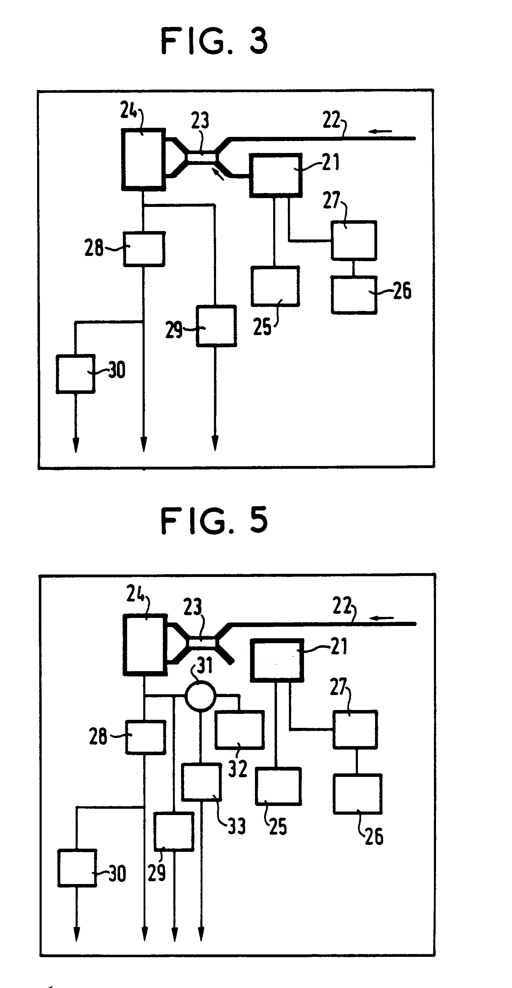

La présente invention vise à assurer la stabilisation des émissions de chaque terminal, en dotant ce dernier, outre ledit filtre d'hétérodynage, d'un filtre de repérage de fréquence supplémentaire permettant la réception des signaux optiques correspondant aux deux canaux adjacents à celui utilisé par ce terminal, ainsi qu'il est représenté figure 2. Cette figure indique les fonctions de transfert T8 et T9 des deux filtres 28 et 29 du terminal représenté partiellement à la figure 3 :

Le filtre 28 est centré à la fréquence intermédiaire ($F_I$) permettant la réception et la démodulation normale des signaux optiques reçus par le terminal.

Le filtre 29 est centré à une fréquence égale à $F_I$-$F_H$ (si $F_I$ est supérieur à $F_H$) ou $F_H$-$F_I$ (si $F_I$ est inférieur à $F_H$) permettant la réception sans démodulation de l'énergie optique véhiculée par les canaux adjacents.

La structure de la partie réceptrice du terminal est alors telle qu'il est représenté figure 3 : elle comporte une fibre optique de réception 22 connectée au coupleur du réseau, et un laser semiconducteur accordable 21 constituant ledit oscillateur local.

Cet oscillateur est utilisé pour la réception hétérodyne des signaux issus de la fibre 22 après mélange dans un mélangeur passif 23 constituant un "coupleur d'hétérodynage" et photodétection par un récepteur photodétecteur 24. L'oscillateur local constitué par le laser 21 est commandé par un circuit de polarisation 25, un circuit de contrôle de la fréquence d'émission 27 et éventuellement un générateur de balayage 26 dont le rôle sera explicité plus loin.

Le récepteur 24 est connecté au filtre d'hétérodynage 28 qui est centré à la fréquence intermédiaire $F_I$, et qui transmet des signaux électriques pouvant être démodulés par un circuit d'amplification et de démodulation 30. Il est connecté d'autre part au filtre supplémentaire 29 à la fréquence $F_I$-$F_H$ ou $F_H$-$F_I$ d'où sont extraits des signaux électriques pouvant être utilisés pour l'accordage du terminal.

Dans ce réseau simplifié chaque canal de transmission est utilisé en mode "ALTERNAT" et la fréquence d'émission est identique à la fréquence de réception. L'émetteur (non représenté ) du terminal peut être accordé en même temps que l'oscillateur local par un système d'asservissement utilisant les signaux issus des filtres 28 et 29. En maximisant ces deux signaux l'émetteur d'une part est verrouillé à sa fréquence nominale d'émission, tout en préservant un écart de fréquence optimum vis-à-vis des deux canaux adjacents dont les signaux sont reçus à travers le filtre 29.

Dans le réseau selon l'invention qui va être décrit ci-après, la transmission s'établit en mode "duplex". Une même fréquence optique porteuse ne peut être utilisée à la fois pour l'émission par deux terminaux en communication. L'échange de données entre deux terminaux s'effectue sur une voie aller et une voie retour distinctes. La transmission sur les fibres optiques constituant de telles voies est unidirectionnelle ; la voie aller correspond aux signaux véhiculés par la fibre d'émission du terminal appelant, la voie retour correspondant aux signaux véhiculés par sa fibre de réception.

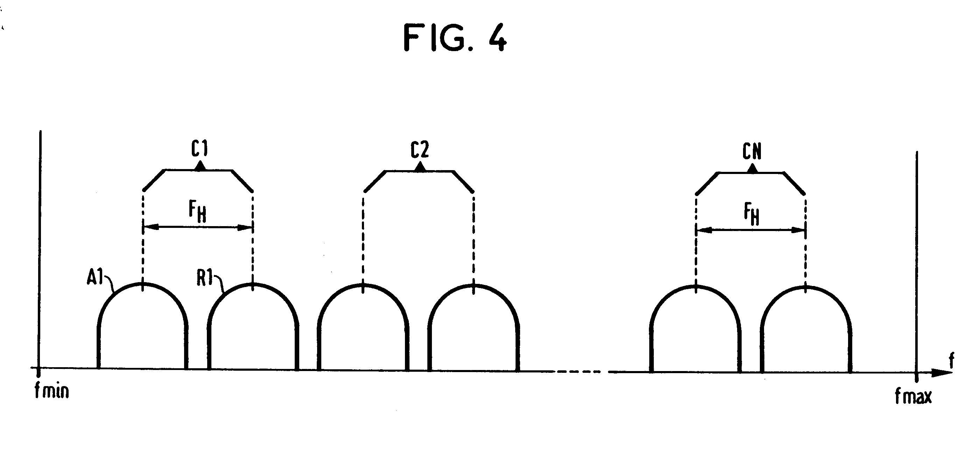

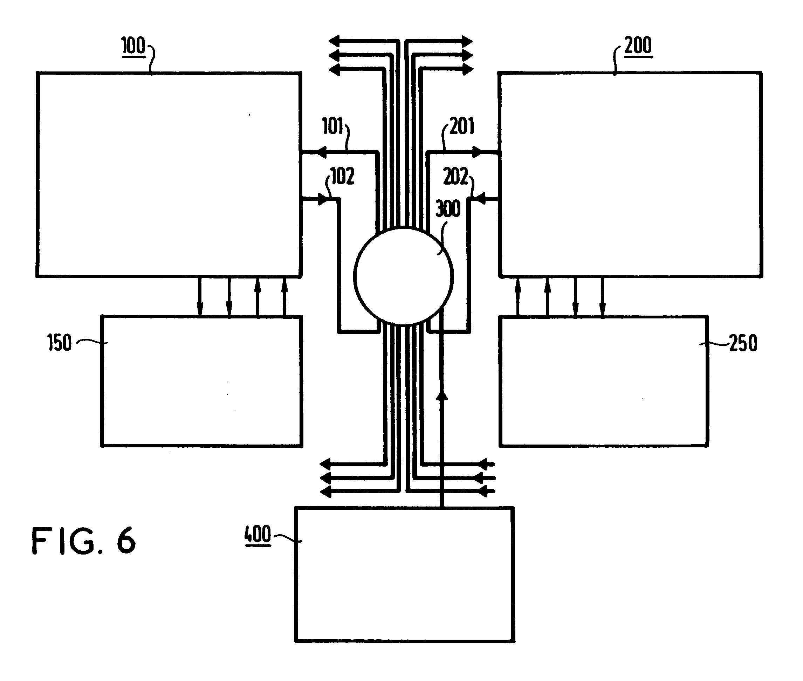

Ce réseau utilise le spectre de fréquences optiques représenté figure 4, où chaque canal tel que C1, C2...CN est subdivisé en une voie "aller" telle que A1 pour le canal C1, (communications du terminal appelant vers le terminal appelé) et une voie "retour" telle que R1 pour le canal C1 (communication du terminal appelé vers le terminal appelant). Les fréquences centrales de ces voies aller et retour constituent lesdites fréquences permises et se succèdent avec un pas égal à l'incrément de fréquence $F_H$. Les fréquences centrales des voies aller, (ou celles des voies retour) se succèdent avec un pas égal au double 2 $F_H$ de cet incrément. C'est pourquoi, si on veut construire un terminal de ce réseau à partir du terminal de la figure 3 on lui ajoute une horloge électrique 32 (voir figure 5) à la fréquence 2 $F_H$ (égale au nouvel espacement entre canaux), un mélangeur électrique 31 et un second filtre 33 à la fréquence $F_I$ pour les signaux issus de ce mélangeur. Avec ces nouveaux moyens :

- on se servira des signaux issus du filtre 33 pour stabiliser l'émetteur du terminal avec un écart de fréquence centrale par rapport aux canaux adjacents égal à 2 $F_H$.
- et on se servira des signaux issus du filtre supplémentaire 29 qui est un filtre de repérage de fréquence de réponse pour stabiliser l'oscillateur local de manière à recevoir les signaux de la voie "retour", dont la fréquence optique porteuse diffère de celle de la voie "aller" par l'incrément $F_H$.

La structure ainsi réalisée pour la partie réceptrice du terminal d'un réseau à multiplexage en fréquence optique permet une stabilisation relative des canaux les uns par rapport aux autres. Dans la structure fréquentielle des ondes présentes sur le réseau, c'est-à-dire dans la succession des fréquences centrales des canaux, chacune de ces fréquences est maintenue par celles qui l'encadrent pour rester égale à une dite fréquence permise. Dans le cas où un seul canal adajacent est actif, donc véhicule de l'énergie détectée par les filtres 29 et 33, le fonctionnement reste identique.

Dans le cas où les deux canaux adjacents sont inactifs, le système constitué par les deux terminaux en communication peut dériver en fréquence, jusqu'à venir "s'appuyer" sur un canal actif ou bien une des fréquences f min et f max précédemment citées. Le spécialiste peut en particulier réaliser un automatisme simple non représenté permettant de provoquer une dérive dès que les canaux adjacents ne sont plus détectables ; la dérive (lente) et contrôlée des fréquences en cours de communication s'effectue alors de manière à pousser systématiquement la pile des fréquences centrales utilisées vers une extrémité prédéterminée de la plage des fréquences du réseau.

Enfin le mode d'accordage précédemment décrit permet un mode d'allocation des canaux par simple exploration de l'espace des fréquences à l'aide d'un générateur de balayage (représenté en 6 sur les figure 3 et 5). L'allocation d'un canal est alors effectuée sous la forme de la recherche d'une zône spectrale inoccupée, de largeur égale à l'extension spectrale d'un canal en se guidant sur les signaux issus des filtres 28 et 29. A titre d'exemple on va maintenant décrire de manière plus détaillée un réseau fonctionnant suivant ce principe.

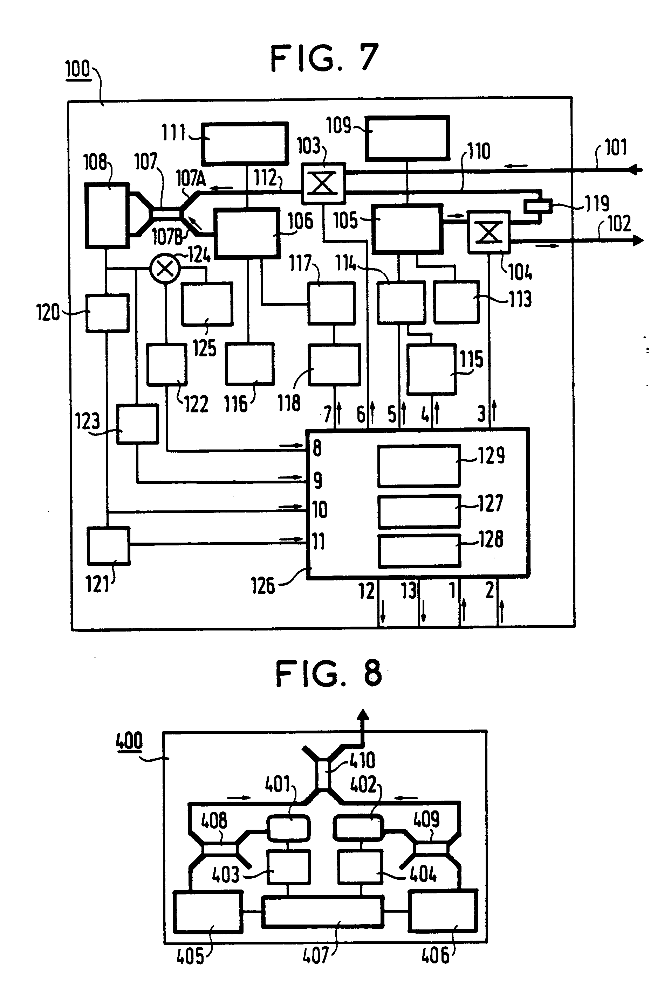

Ce réseau est représenté figures 6 et 7 et comporte les éléments communs et les caractéristiques inventives précédemment mentionnées. Il comporte des fibres optiques monomodes interconnectant N terminaux via un coupleur étoile 300. Seuls deux terminaux 100 et 200 sont représentés. Chaque terminal est relié au coupleur 300 par une fibre, d'émission (102 pour le terminal 100), et une fibre de réception (101 pour le terminal 100). Un générateur d'accordage 400 est également connecté au coupleur étoiie 300, du côté des fibres d'émission.

A l'aide de la figure 7, on va maintenant décrire les éléments constituant ledit terminal "considéré" qui est par exemple le terminal 100. Les éléments correspondant du terminal 200 ne sont pas représentés et ils sont désignés dans la description ci-après par les mêmes nombres de référence augmentés du nombre 100, les éléments 201 et 202 par exemple correspondant aux éléments 101 et 102 et leur étant identiques dans leurs natures et leurs fonctions.

La fibre "de réception" 101 est connectée à un dispositif actif dit "coupleur directionnel" 103, décrit par exemple dans la référence

"Integrated Optics Switches and Modulators", R.V. Schmidt in "Integrated Optics, Physics and applications" ed. S. Martellucci & A.N. Chester, Plenum Press 1981, p181

Cet élément permet, par le jeu d'une tension de commande, d'établir l'une ou l'autre de deux doubles connexions optiques, une première et une deuxième entrées étant connectées soit à une première et une deuxième sorties, soit à la deuxième et à la première sortie, respectivement.

Une des sorties du coupleur directionnel 103 est reliée par un guide monomode à une extrémité constituant une entrée "de réception" 107A d'un mélangeur passif 107 qui constitue ledit coupleur d'hétérodynage et qui répartit le faisceau optique incident en parties égales sur ses deux extrémités de sortie. L'autre extrémité d'entrée du mélangeur passif 107 constitue ladite entrée locale. Elle est reliée à un laser semi-conducteur accordable électroniquement 106, qui constitue l'oscillateur local du terminal 100 pour la réception hétérodyne des signaux reçus par la fibre 101. Les deux extrémités de sortie du mélangeur 107 sont reliées à un dispositif de photodétection 108 dit "équilibré" décrit en particulier dans la référence :

F.L. ABBAS, V.W.S. CHAN, T.K. YEE, "A dual détector optical heterodyne receiver for local oscillator noise suppression" IEEE J. Lightwave Technol.K, LT-S, n° 5, 1985, pp 1110-1122.

Ce dispositif connu permet d'obtenir une réception hétérodyne des signaux optiques relativement insensible au bruit d'intensité de l'oscillateur local et présentant de bonnes performances notamment en ce qui concerne le bruit d'interférence provoqué par les canaux de transmission adjacents.

De plus, le dispositif 108 comporte des moyens connus pour compenser les fluctuations de l'état de polarisation des signaux optiques reçus. On utilise par exemple l'une des méthodes suivantes :

- Réception à diversité de polarisation, décrite par exemple dans la référence :
  B. GLANCE, "Polarization independent coherent optical receiver", IEEE.? J. Lightwave Technol., vol. LT-5, n 2, 1987, pp 274-276
- Réception hétérodyne insensible aux fluctuations de l'état de polarisation synchrone de l'état de polarisation de l'onde signal reçue de l'onde signal émise, décrite par exemple dans la référence : L.J. CIMINI, I.M.I. HABBAB, S. YANG, A.J. RUSTAKO, K.Y. LIOU, C.A. BURRUS, "Polarisation-insensitive coherent Lightwave System using wide-deviation FSK and data-induced polarisation switching", Electron. Lett., vol 24, n° 6, 1988, pp 358-360.

L'emploi de cette dernière technique suppose que l'émetteur 105 soit équipé d'un dispositif de modulation de l'état de polarisation des signaux qu'il émet, ainsi qu'il sera rappelé dans la suite.

La fibre d'émission 102 collecte les signaux émis par un laser semi-conducteur accordable électroniquement 105 qui constitue ledit émetteur. Un coupleur directionnel 104 est utilisé pour diriger les signaux optiques émis par l'émétteur 105 soit vers la fibre d'émission 102, soit vers une entrée du coupleur directionnel 103 par l'intermédiaire d'un élément atténuateur optique 119 dont le rôle est d'équilibrer les niveaux de puissance des signaux incidents sur les deux entrées du coupleur 103.

Les lasers semi-conducteurs 105 et 106 sont munis en outre des éléments non représentés suivants :

- un dispositif d'isolation optique,
- un dispositif d'isolation optique, qui devra être insensible à l'état de polarisation de l'onde réfléchie vers le laser si la transmission des signaux optiques est effectuée avec modulation synchrone de leur état de polarisation. Ce dispositif d'isolation optique est décrit par exemple dans la référence : M. SHIRASAKI, K. ASAMA "Compact Optical Isolator for fibers using birefringent wedges", Appl. Opt. , vol. 21 n° 23, 1982, pp 4296-4299.

Avec ce type de transmission le laser 105 ou 106 devra être équipé d'un dispositif de modulation de l'état de polarisation de l'onde qu'il émet, dispositif passif (voir référence préalablement citée, L.J. CIMINI et al.) ou actif, à effet électro-optique, décrit dans la référence : F.K. REINHART, R.A. LOGAN "Electro-optic frequency and polarization-modulated injection laser", Appl. Phys. Lett, 36 (12) 1980, pp. 954-956.

- et d'un dispositif optique permettant de coupler le faisceau émis dans le guide monomode placé en vis à vis.

Ces lasers sont en outre munis des éléments suivants :

- un raccordement électrique vers une alimentation 113 ou 116 pour l'émetteur 105 ou pour l'oscillateur local 106, respectivement,
- un raccordement électrique vers un circuit de contrôle de la fréquence optique d'émission, dit "circuit d'accord" et numéroté 114 ou 117 pour l'émetteur 105 ou pour l'oscillateur local 106,
- une enceinte externe de régulation thermique 110 ou 112, contrôlée et commandée par le circuit 109 ou 111, pour l'émetteur 105 ou pour l'oscillateur local 106. Ce dispositif stabilise la température de fonctionnement du laser semiconducteur avec une très bonne précision, de l'ordre de $\pm$ 0,01°C.

La modulation des ondes optiques émises par l'émetteur 105 est réalisée à l'aide d'un circuit de modulation 115 raccordé au circuit d'accord 114. Une modulation de type externe du faisceau émis par l'émetteur 105 serait également possible, par le jeu d'un modulateur électro-optique (par exemple), qui serait alors directement commandé par le circuit 115. La commande du circuit d'accord 117 de l'oscillateur local 106 est effectuée par un circuit 118 qui constitue ledit générateur de balayage et dont le rôle sera explicité plus loin.

Le terminal 100 comprend, en outre, un circuit de filtrage et d'amplification 120 à ladite fréquence intermédiaire, $F_I$, ce circuit constituant ledit filtre d'hétérodynage, un circuit de démodulation 121 permettant de décoder les signaux détectés par le récepteur hétérodyne 108, un circuit de filtrage et d'amplification 123 à une fréquence $F_G$, qui sera explicitée par la suite, et un mélangeur 124 qui constitue ledit mélangeur de repérage et qui permet de mélanger les signaux issus du récepteur 108 avec le signal fourni par l'horloge 125. La sortie de ce mélangeur est raccordée à un circuit de filtrage et d'amplification 122 à la fréquence intermédiaire $F_I$, ce circuit constituant ledit filtre de recherche de canal.

Enfin, le terminal est commandé dans son ensemble par un micro-processeur 126, qui constitue ledit circuit de commande. Ce micro-processeur est équipé d'une unité centrale 129, d'une mémoire vive 127, d'une mémoire morte 128 et de treize bornes d'entrées-sorties permettant d'assurer les fonctions suivantes :

- borne 1 (entrée) : entrée des informations à transmettre (en provenance dudit périphérique 150)
- borne 2 (entrée) : ordre d'appel (en provenance du périphérique)
- borne 3 (sortie) : commande du coupleur directionnel 104
- borne 4 (sortie) : commande du circuit de modulation 115 de l'émetteur 105
- borne 5 (sortie) : commande du circuit d'accord 114 de l'émetteur 105
- borne 6 (sortie) : commande du coupleur directionnel 103
- borne 7 (sortie) : commande du générateur de balayage 118
- borne 8 (entrée) : entrée des signaux de repérage issus du circuit 122
- borne 9 (entrée) : entrée des signaux de repérage issus du circuit 123

- borne 10 (entrée): entrée des signaux de repérage issus du circuit 120
- borne 11 (entrée): entrée des signaux démodulés issus du circuit 121
- borne 12 (sortie) : sortie des données reçues (vers un périphérique)
- borne 13 (sortie) : signal d'appel (vers un périphérique).

On va maintenant décrire à l'aide de la figure 8 les éléments constituant le générateur d'accordage.

Ce générateur 400 est constitué essentiellement de deux sources laser à semi-conducteurs 401 et 402, qui sont du même type que l'oscillateur 106 mais qui émettent à fréquence optique fixe et sont dotés chacun d'une régulation électrique et thermique 403 ou 404. La fréquence d'émission de chacune de ces sources laser est contrôlée en permanence par un dispositif à interféromètre de type Fabry-Pérot 405 ou 406, capable de fournir un signal électrique d'asservissement au circuit 407 qui pilote les sources 401 et 402. Les signaux optiques émis par les sources 401 et 402 sont regroupés dans une même fibre optique monomode 411, via un mélangeur passif 410, et distribués vers tous les terminaux par le coupleur en étoile 300. Des mélangeurs passifs 408 et 409 permettent de prélever une partie des faisceaux émis respectivement par les sources 401 et 402 à des fins de contrôle par les dispositifs 405 et 406.

La source 401 émet une onde optique très stable, constituant une dite onde d'accordage et affectée d'une modulation par une séquence périodique caractéristique permettant son identification par tous les terminaux du réseau. La valeur de sa fréquence optique est minimale et notée f min. Elle constitue une borne inférieure de la plage des fréquences optiques du réseau. La source 402 émet également une onde optique très stable, affectée d'une modulation par une séquence périodique caractéristique permettant son identification par tous les terminaux du réseau. La valeur de sa fréquence est maximale et notée f max. Elle constitue une borne supérieure de cette même plage.

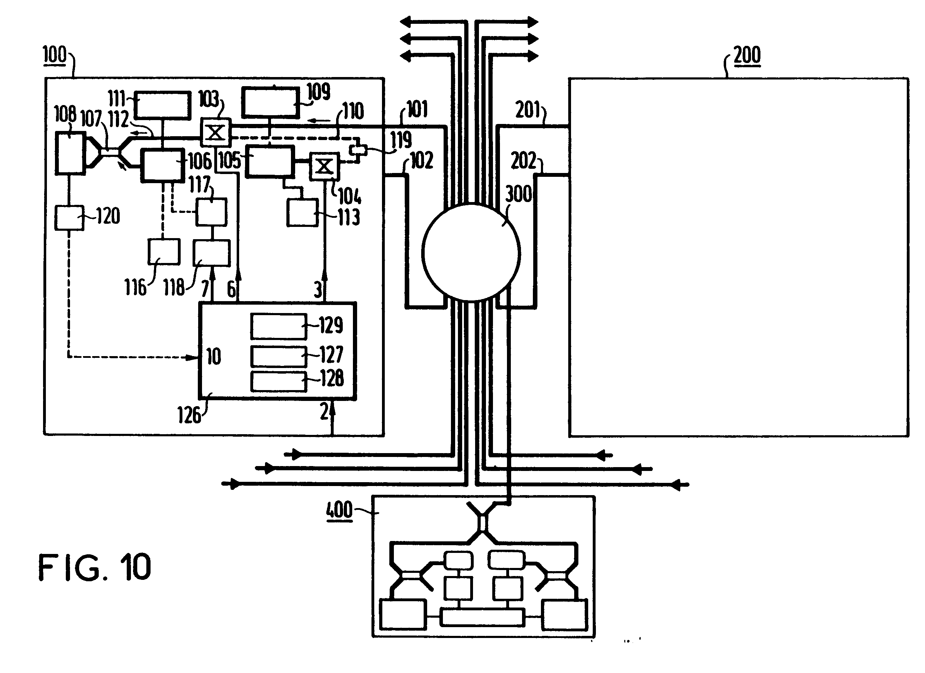

On va maintenant décrire, dans le cas du terminal précédemment considéré, la procédure de mise en fonctionnement d'un terminal et son mode d'attente (voir figure 10).

A la mise en marche de ce terminal 100, le coupleur directionnel 104 est alimenté par le circuit 126 de manière à connecter l'émetteur 105 au coupleur directionnel 103, ce dernier étant lui-même alimenté par le circuit 126 de manière à connecter la fibre de réception 101 au mélangeur 107.

Le générateur de balayage 118, commandé par le circuit 126, fournit au circuit d'accord 117 un signal électrique périodique ainsi qu'il est représenté figure 9A. A ce signal électrique est associée une variation périodique de la fréquence locale qui est celle de l'onde optique émise par l'oscillateur local 106 et qui constitue aussi ladite fréquence d'exploration.

Le récepteur hétérodyne 108, muni du filtre 120 à la fréquence intermédiaire $F_I$, permet de détecter les signaux optiques présents sur la fibre de réception 101 ; ces signaux sont transmis au circuit 126 par la borne d'entrée numérotée 10.

Lorsqu'un signal est ainsi détecté par le filtre 120, une impulsion électrique constituant un dit signal de repérage est transmise au circuit 126, qui enregistre alors dans sa mémoire vive 128 la valeur du courant d'accord fourni par le circuit 117 à l'oscillateur local 106, c'est-à-dire un nombre représentatif de la fréquence de l'onde optique émise par celui-ci, et une information attestant la présence d'un canal occupé, ainsi qu'il est représenté figure 3C. On notera qu'un canal est occupé dès que sa voie aller ou sa voie retour sont utilisées, et que, en raison de l'utilisation d'une détection hétérodyne, à chaque émission de l'oscillateur local 106 à une fréquence locale F, correspondent deux signaux détectés aux fréquences optiques $F+F_I$ et $F-F_I$.

Le balayage s'effectue sur toute la plage d'accordabilité de l'oscillateur local. Lorsque l'extrémité de cette plage est atteinte, le sens du balayage est inversé, et l'exploration de l'espace des fréquences du réseau recommence.

Dans la mémoire vive du circuit 126 est ainsi enregistrée une carte des plages spectrales occupées par les terminaux du réseau. Les canaux occupés ou vacants peuvent ainsi être déterminés à chaque "balayage". De plus, par programme, le circuit 126 peut comparer à chaque instant l'état d'occupation des canaux du réseau avec ce qu'il était lors du balayage précédent ; il peut donc à chaque instant détecter un appel éventuel (canal nouvellement occupé) ou un canal pour appeler (canal nouvellement disponible).

En extrémité de balayage, le récepteur 108 détecte toujours une onde d'accordage issue du générateur 400. Cette information peut être exploitée par le circuit 126 pour affiner la stabilisation de la fréquence de l'oscillateur local, par contrôle de la plage de variation du courant d'accord fourni par le circuit 117. De plus, l'absence de toute émission sur le réseau n'est en aucun cas préjudiciable au bon fonctionnement du terminal qui est "mis en marche" le premier.

Le mode de fonctionnement qui vient d'être décrit est le mode dit "d'attente". Les figures 9A, 9B et 9C résument de façon synthétique la situation dans ce mode en représentant le spectre des canaux occupés, les signaux de balayage appliqués à l'oscillateur local 106. et les signaux détectés par le récepteur 108 et transmis pour mémorisation au circuit 126.

On va maintenant décrire la procédure d'appel.

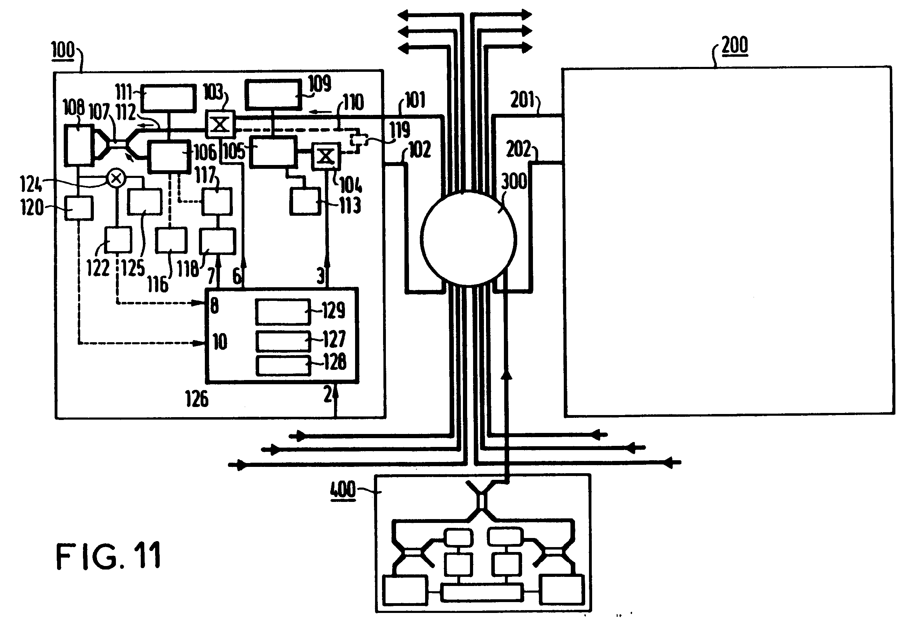

Lorsque le périphérique 150 demande l'établissement d'une communication via un signal d'appel appliqué à la borne n° 2 du circuit de commande 126 et identifiant le terminal appelé, on entame une "procédure d'appel" (figure 11).

L'unité centrale du circuit 126 stoppe le balayage spectral de l'oscillateur local 106, commandé par les circuits 118 et 117, dès qu'un canal disponible est repéré selon le processus décrit précédemment.

Pour la clarté de l'exposé, on appellera $F_k$ la fréquence centrale de la voie aller du canal vacant, et $F_{k+1}$ la fréquence centrale de la voie retour.

On rappelle que $F_{k+1} - F_k = F_H$ quel que soit k.

La fréquence optique de l'oscillateur local 106 est réglée par les circuits 126 et 117 à la valeur $F_k + F_l$ ; et ce réglage est affiné de deux manières, :

- en minimisant (par réglage du courant d'accord fourni par le circuit 117) le signal issu du filtre 120 à la fréquence $F_l$ et appliqué à la borne n° 10 du circuit 126 ; ce signal atteste de l'absence de signal optique à la fréquence $F_k$ sur la fibre 101, c'est-à-dire sur le réseau. Le terminal s'assure ainsi de la présence d'un canal disponible.
- en maximisant (par réglage du courant d'accord de 117 le signal issu du filtre 122 à la fréquence $F_l$ et appliqué à la borne n° 8 du circuit 126. Ce signal provient des signaux optiques présents sur le réseau aux fréquences $F_k + 2F_H = F_{k+2}$ et $F_k - 2F_H = F_{k-2}$ donc provenant des voies aller des deux canaux adjacents ; le terminal s'assure ainsi que la fréquence optique centrale définissant la voie aller qui va être utilisée par le terminal 100 est correctement positionnée par rapport aux canaux voisins.

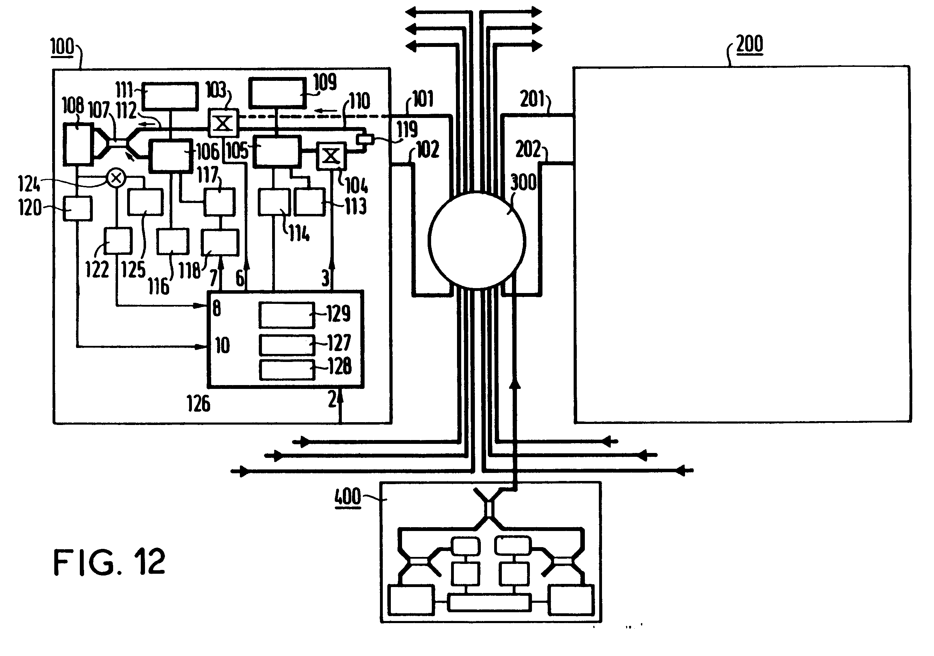

Le terminal peut alors régler la fréquence d'émission de l'émetteur 105 du terminal 100. Pour cela, (voir figure 12) le circuit 126 commande le coupleur directionnel 103 de manière à connecter l'émetteur 105 au mélangeur passif 107. La fréquence optique d'émission de cet émetteur est réglée à la valeur $F_k$ et le réglage est affiné:

- en maximisant (par réglage du courant d'accord du circuit 114) le signal issu du filtre 120 à la fréquence $F_l$ appliqué à la borne n° 10 du circuit 126 ; le terminal s'assure ainsi de l'émission à la fréquence $F_k$.

Ce réglage effectué, le terminal est prêt à envoyer un message d'appel. Cependant, le terminal doit se mettre en condition pour recevoir une réponse à l'appel qu'il va effectuer. On sait que cette réponse parviendra par la voie retour du même canal, et le terminal peut d'ores et déjà régler la fréquence de l'oscillateur local 106 à la valeur adéquate, égale à :

$$F_{k+1} - F_l = F_k + F_H - F_l$$

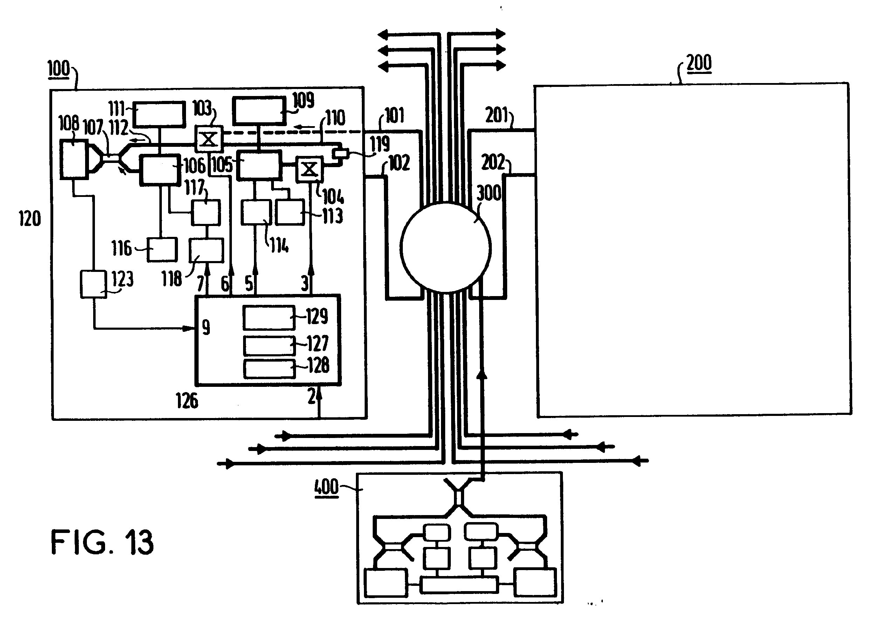

Le nouveau réglage de la fréquence optique d'émission de l'oscillateur local 126 est réalisé simplement (figure 13) en maximisant (par réglage du courant d'accord fourni par le circuit 117) le signal issu du filtre 123 à la fréquence $F_H - F_l$ et appliqué à la borne n° 9 du circuit 126.

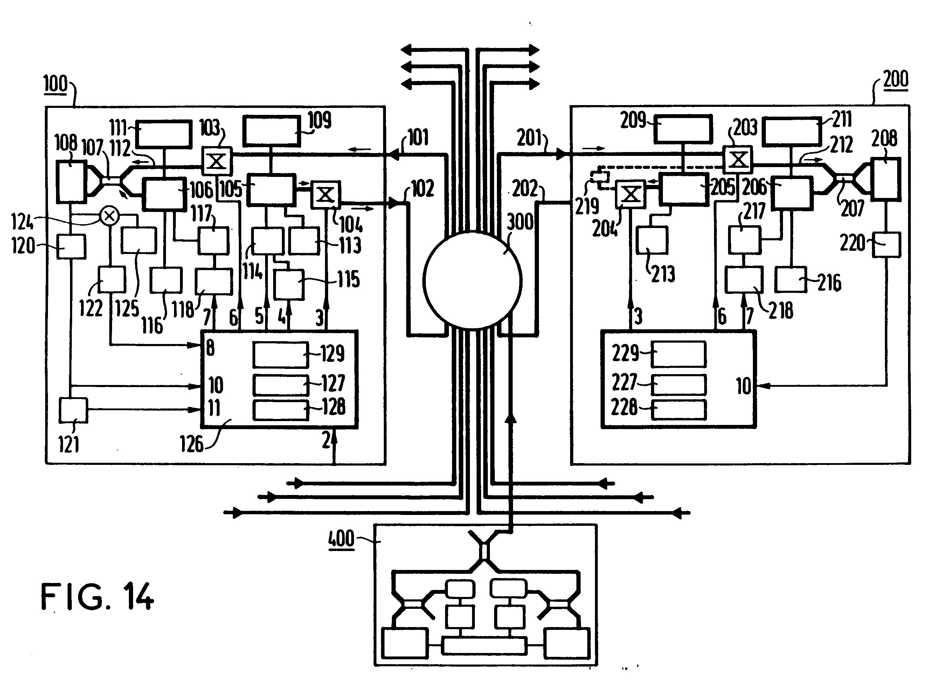

Le terminal est alors prêt à envoyer un message d'appel (voir figure 14). Le circuit 126 commande le coupleur directionnel 103 de manière à reconnecter la fibre de réception et le mélangeur passif 107. Si aucun signal n'est détecté par le récepteur 108 et transmis à la borne n° 10 du circuit 126, le canal "k" est toujours vacant. Le circuit 126 commande le coupleur directionnel 104 pour connecter l'émetteur 105 au réseau. Une trame d'appel est émise, comportant l'identification des terminaux appelant et appelé (en l'occurence les terminaux 100 et 200), et un message d'appel. Cette trame est réémise périodiquement jusqu'à réception d'un message d'acquittement ou, en l'absence d'un tel message, jusqu'à expiration d'un "délai de réponse" préétabli.

On va maintenant décrire la procédure de détection d'appel et d'acquittement.

Considérons à présent le terminal appelé 200. Ce terminal est placé en mode d'attente ; son oscillateur local 206 balaye l'espace des fréquences porteuses du réseau et son circuit de commande 226 mémorise les informations sur l'état d'occupation des canaux.

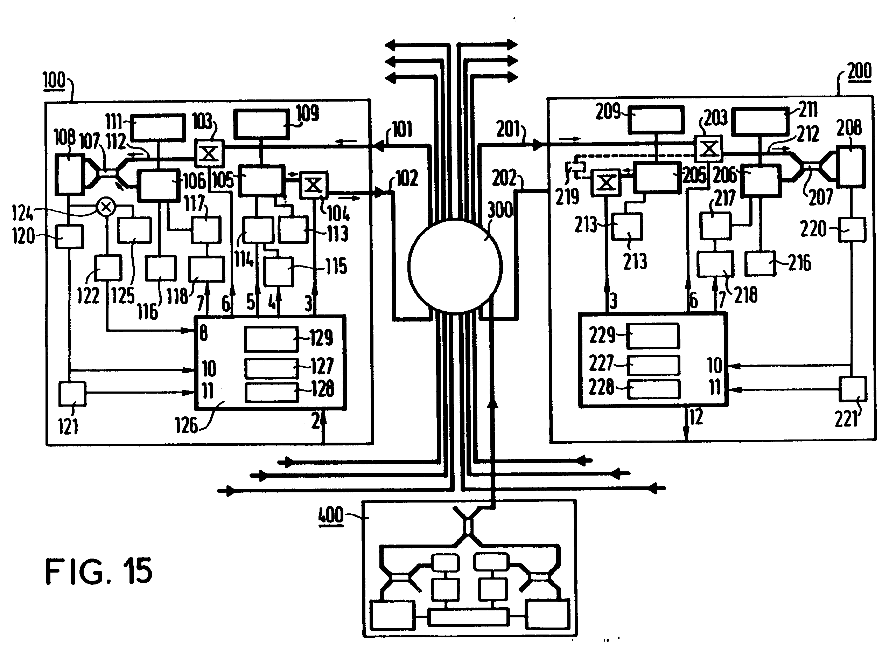

Dès qu'un canal "nouvellement occupé" est identifié, il y a éventualité d'appel adressé au terminal 200. La fréquence d'émission de l'oscillateur local 206 est alors réglée à la valeur $F_k + F_l$ de manière à démoduler les signaux présents sur ce canal "k" (voir figure 15) et le réglage est affiné :

- en maximisant (par réglage du courant d'accord fourni par le circuit 217) le signal issu du filtre 220 à la fréquence $F_l$ et appliqué à la borne n° 10 du circuit 226 ; le terminal se met ainsi en condition pour démoduler les signaux optiques à la fréquence $F_k$,
- en maximisant (par réglage du courant d'accord fourni par le circuit 217) le signal issu du filtre 222 à la fréquence $F_l$ et appliqué à la borne n° 8 du circuit 226 ; ce signal provient des signaux optiques présents sur le réseau aux fréquences

$F_k + 2F_H = 2_{k+2}$ et $F_k - 2F_H = F_{k-2}$, donc provenant des voies aller des deux canaux adjacents ; le terminal s'assure ainsi que la fréquence optique centrale de réception correspondant à la voie aller qui est utilisée par le terminal appelant (en l'occurence 100) est correctement positionnée par rapport aux canaux voisins.

Le terminal 200 peut à présent s'informer de l'existence d'un appel, par démodulation (en sortie du circuit 221) des signaux issus du récepteur 208. Si la trame d'appel ne comporte pas son numéro d'identification, le terminal est remis en mode d'attente.

Si la trame d'appel est adressée au terminal 200, celui-ci doit se mettre en condition pour envoyer un message d'acquittement. Il faut donc régler la fréquence optique de l'émetteur 205 à la valeur définissant la voie retour du canal "k", soit $F_{k+1} = F_k + F_H$ (voir

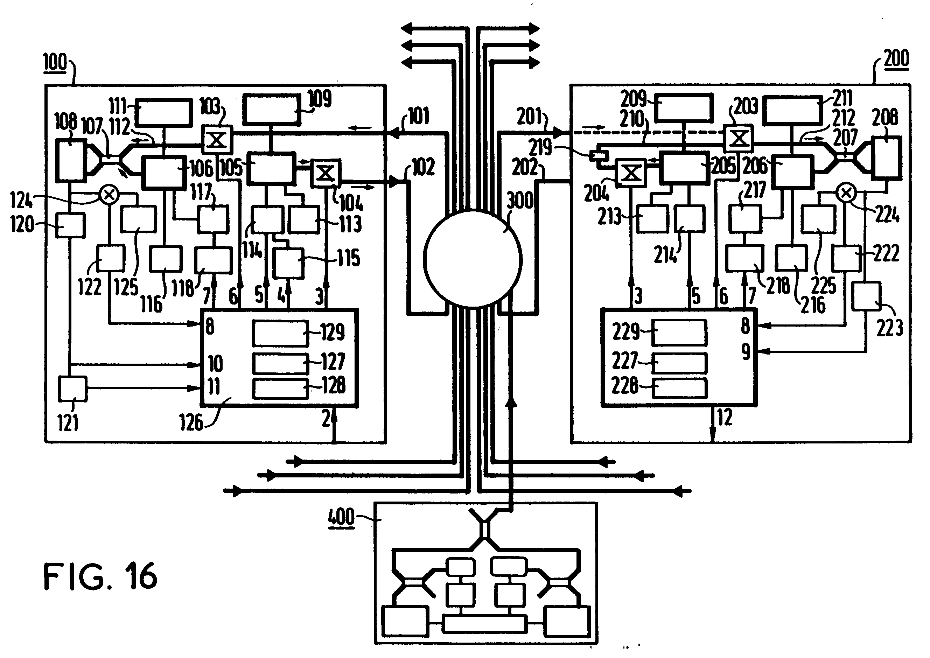

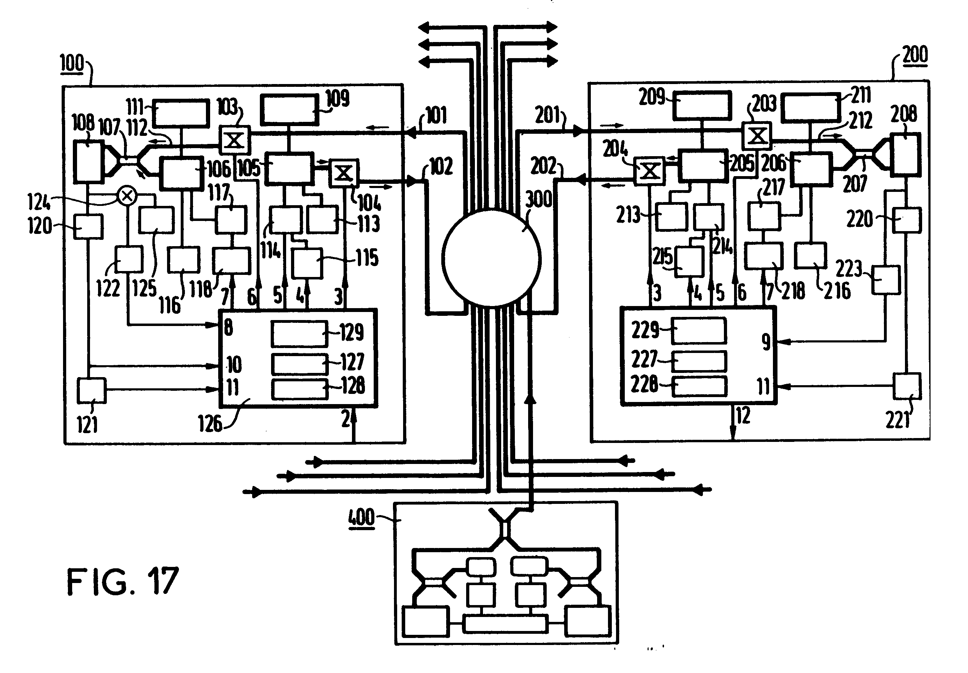

figure 16), en maximisant (par réglage du courant d'accord fourni par le circuit 214) le signal issu du filtre 223 à la fréquence $F_H$ - $F_I$ et appliqué à la borne n°9 du circuit 226. Les coupleurs directionnels 20S et 204 sont réglés de manière à connecter la fibre de réception 201 au mélangeur 207 et la fibre d'émission 202 à l'émetteur 20S. Le terminal 200 envoie un message d'acquittement au terminal 100 et l'échange d'information peut s'établir (voir figure 17).

A la fin de la communication chaque terminal se remet en mode d'attente.

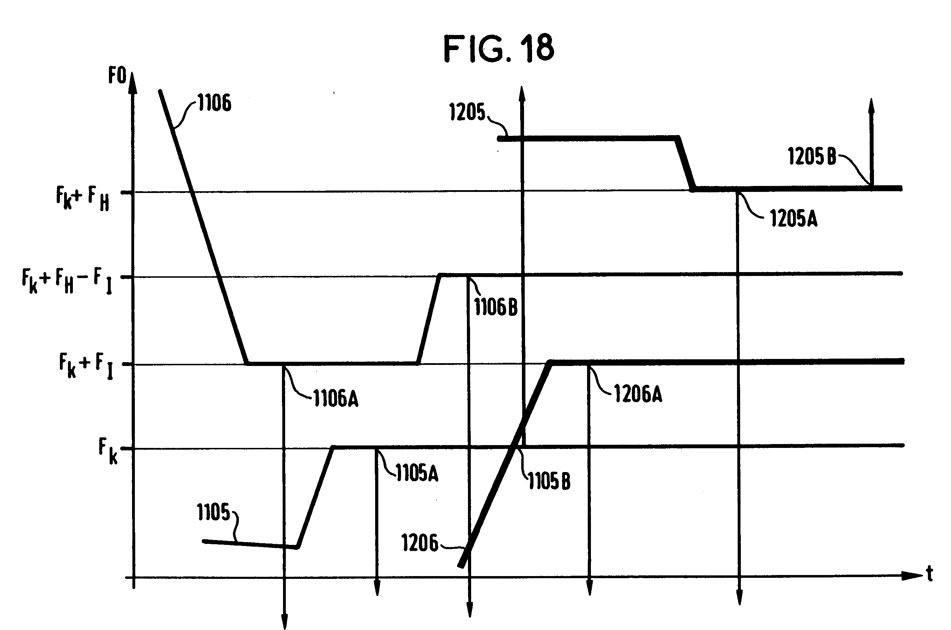

La figure 18 résume la totalité de la procédure d'établissement d'une communication entre deux terminaux en représentant, en fonction du temps, la séquence de réglage des fréquences d'émission des émetteurs 105 et 205 et des oscillateurs locaux 106 et 206 sur les courbes 1105, 1205, 1106 et 1206 respectivement.

Des régions de ces courbes sont référencées 1105 A et 1105 B pour le réglage de l'émetteur 105 et l'émision d'une trame d'appel, 1106 A et 1106 B pour la recherche d'un canal disponible et le réglage de l'oscillateur local 106 par rapport à la fréquence retour, 1205 A et 1205 B pour le réglage de l'émetteur 205 et l'émission d'une trame d'acquittement, et 1206 A pour la détection d'appel et le réglage de l'oscillateur local 206 par rapport à la fréquence retour.

## Revendications

1. Réseau de communication sur fibres optiques avec multiplexage en fréquence, ce réseau comportant
   - des terminaux (100, 200) associés à des périphériques pour permettre la transmission d'informations entre ces périphériques, chacun de ces terminaux étant apte à être tantôt appelant, tantôt appelé, tantôt en attente, un terminal étant appelant pour émettre un message aller portant une dite information, cette information étant à transmettre à un terminal appelé sous la forme d'une modulation sur une onde porteuse optique présentant une fréquence aller, ce terminal appelant étant alors en émission, ce terminal appelé (200) étant apte à recevoir ce message aller et étant alors en réception,
   - deux fibres optiques monomodes pour chacun desdits terminaux, ces fibres étant une fibre d'émission (102) et une fibre de réception (101) pour l'émission et la réception desdits messages par ce terminal, respectivement,
   - un coupleur en étoile (300) pour recevoir lesdites ondes porteuses lui parvenant de tous lesdits terminaux par lesdites fibres d'émission, et pour transmettre chacune de ces ondes porteuses vers tous ces terminaux par lesdites fibres de réception, de sorte que toutes lesdites ondes porteuses sont reçues par chaque dit terminal,
   - et un générateur d'accordage (400) émettant des ondes d'accordage qui sont, elles aussi, reçues par tous lesdits terminaux pour définir une succession de fréquences permises dont chacune peut être choisie pour constituer une dite fréquence aller chaque fois qu'un dit message aller doit être transmis, de manière que lesdits terminaux appelant et appelé soient alors accordés sur une même fréquence, cette fréquence étant alors occupée, les fréquences permises non occupées restant disponibles pour la transmission d'autres messages,
   - les divers dits terminaux comportant respectivement des éléments semblables qui sont, pour un terminal considéré (100), qui est l'un quelconque de ces terminaux :
   - un émetteur commandable (105) pour émettre une dite onde porteuse sur ladite fibre d'émission lorsqu'un message doit être émis par le terminal considéré et pour réaliser ladite modulation de cette onde, la fréquence de cette onde étant commandable et constituant une fréquence d'émission de ce terminal,
   - un oscillateur local (106) pour fournir une onde locale optique à fréquence locale commandable,
   - un mélangeur d'hétérodynage (107) à deux entrées recevant d'une part, sur une entrée de réception (107A), lesdites ondes porteuses reçues par le terminal considéré, une telle onde constituant une onde de réception avec une fréquence de réception pour ce terminal lorsque le message porté par cette onde est à transmettre à ce terminal, ce mélangeur recevant d'autre part ladite onde locale sur une entrée locale (107B) et mélangeant cette onde avec lesdites ondes reçues, ce mélangeur étant pourvu d'un récepteur (108) photodétecteur pour former notamment, par mélange avec ladite onde de réception et par photodétection, un signal de battement de réception de nature non optique, à une fréquence intermédiaire prédéterminée ($F_I$) qui est la différence entre lesdites fréquences de réception et locale,
   - un filtre d'hétérodynage (120) accordé sur ladite fréquence intermédiaire pour sélectionner ce signal de battement de réception,
   - un circuit de démodulation (121) pour recevoir ce signal de battement de réception, pour le démoduler, et pour fournir un signal démodulé représentatif d'une dite information qui était à transmettre au terminal considéré et qui était portée par ladite onde de réception,

- et un circuit de commande (126), ce circuit étant relié audit périphérique associé au terminal considéré pour en recevoir ladite information à transmettre, ce circuit commandant en conséquence ledit émetteur pour réaliser ladite modulation de l'onde porteuse lorsque le terminal considéré est en émission, ce circuit recevant ledit signal démodulé et transmettant en conséquence ladite information reçue audit périphérique associé lorsque le terminal considéré est en réception, ce circuit commandant ladite fréquence d'émission avec l'aide desdites ondes d'accordage lorsque le terminal considéré est en émission, cette fréquence d'émission étant choisie parmi lesdites fréquences disponibles, et ce circuit commandant ladite fréquence locale en fonction de ladite fréquence de réception lorsque le terminal considéré est appelé, de manière que la différence entre cette fréquence locale et cette fréquence de réception soit égale à ladite fréquence intermédiaire prédéterminée,

ce réseau étant caractérisé par le fait que ledit terminal (100) considéré comporte en outre des moyens d'incrémentation de fréquence (106 à108, 118, 120, 122 à 126)propres à effectuer des opérations d'incrémentation consistant chacune à engendrer une onde optique à une fréquence présentant un incrément de fréquence ($F_H$) à partir de la fréquence d'une dite onde reçue par ce terminal, cet incrément de fréquence étant commun aux divers dits terminaux de manière que ces opérations d'incrémentation définissent, à partir d'une fréquence de base (f min) qui est elle-même définie par lesdites ondes d'accordage, une succession régulière de dites fréquences permises séparées par cet incrément de fréquence, une fréquence permise suivante ($F_{k+1}$) étant définie par une telle opération d'incrémentation effectuée dans le terminal considéré à partir d'une fréquence permise précédente ($F_k$) occupée par un autre terminal,

- ledit circuit de commande (126) coopérant avec ces moyens d'incrémentation de fréquence, lorsque le terminal considéré doit passer en émission, pour définir une dite fréquence disponible, ce circuit commandant alors ladite fréquence d'émission pour la rendre égale à la fréquence disponible ainsi définie.

2. Réseau selon la revendication 1, caractérisé par le fait que lesdits moyens d'incrémentation de fréquence comportent :
   - un générateur d'exploration (106) pour engendrer une onde d'exploration à une fréquence optique commandable,
   - un générateur de balayage (118) commandé par ledit circuit de commande (126) et commandant ledit générateur d'exploration pour faire balayer un espace des fréquences du réseau par la fréquence de ladite onde d'exploration,
   - un mélangeur d'incrémentation (107) muni d'un récepteur (108) photodétecteur pour recevoir, d'une part, lesdites ondes reçues par le terminal considéré (100) et, d'autre part, ladite onde d'exploration, et pour mélanger ces ondes reçues avec cette onde d'exploration de manière à former un signal de battement de balayage de nature non optique à des fréquences différentielles,
   - et un système de repérage de fréquence (120, 122 à 125) recevant ledit signal de battement de balayage et fournissant un signal de repérage de fréquence audit circuit de commande quand la fréquence de ce signal de battement passe par au moins une fréquence propre à ce système de repérage de fréquence et liée audit incrément de fréquence, de manière à permettre à ce circuit de commande, à partir de ces signaux de repérage, de commander une dite fréquence d'émission pour la rendre égale à une dite fréquence disponible.

3. Réseau selon la revendication 2, caractérisé par le fait que ledit système de repérage de fréquence (120, 122 à 125) comporte au moins un filtre de fréquence (120, 122, 123) et/ou une horloge (125),une fréquence de ce filtre et/ou de cette horloge constituant une dite fréquence propre de ce système de repérage.

4. Réseau selon la revendication 2, caractérisé par le fait que ledit système de repérage (120, 122 à 125) possède un groupe de fréquences propres qui est constitué d'au moins une fréquence et à partir duquel ledit incrément de fréquence est défini par des opérations d'addition de soustraction et/ou d'égalité de fréquences.

5. Réseau selon la revendication 4, caractérisé par le fait que ledit groupe de fréquences propres comporte ladite fréquence intermédiaire ($F_I$) et l'intervalle ($F_H$-$F_I$) entre cette fréquence intermédiaire et ledit incrément de fréquence ($F_H$).

**6.** Réseau selon la revendication 2, caractérisé par le fait que ledit générateur d'onde de balayage et ledit mélangeur d'incrémentation sont constitués par ledit oscillateur local (106) et par ledit mélangeur d'hétérodynage (107), ledit terminal considéré (100) comportant en outre un groupe de coupleurs directionels (103, 104) commandés par ledit circuit de commande (126) pour permettre à ce circuit de diriger l'onde émise par ledit émetteur (105) soit vers ladite entrée de réception (107A) du mélangeur d'hétérodynage soit vers ladite fibre d'émission (102) et de diriger vers cette entrée soit lesdites ondes reçues par le terminal considéré, soit l'onde émise par ledit émetteur.

**7.** Réseau selon la revendication 3, dans lequel ledit terminal appelé est apte à émettre, en réponse audit message aller, un message retour portant une autre dite information à transmettre au terminal appelant sous la forme d'une modulation sur une onde porteuse optique présentant une fréquence retour, ce terminal appelé étant alors en émission, et ce terminal appelant étant apte ensuite à recevoir ce message retour, ce terminal appelant étant alors en réception, et dans lequel ladite fréquence retour est adjacente à ladite fréquence aller dans ladite succession de fréquences permises, cette succession comportant alternativement desdites fréquences aller et desdites fréquences retour et étant en même temps une succession de canaux constitués chacun de deux fréquences qui sont une dite fréquence aller pour un dit message aller et une dite fréquence retour pour un dit message retour émis en réponse à ce message aller, chaque dit canal étant disponible seulement lorsque ses deux dites fréquences aller et retour sont disponibles, ce réseau étant caractérisé par le fait que ledit système de repérage comporte

- une horloge (125) pour fournir un signal d'horloge à une fréquence d'horloge qui est une dite fréquence propre et qui est le double dudit incrément de fréquence,
- un mélangeur de repérage (124) pour mélanger ce signal d'horloge à un signal issu dudit mélangeur d'hétérodynage et fournir un signal de mélange de repérage,
- et des filtres de repérage (120, 122, 123) ayant desdites fréquences propres dont les valeurs sont définies par des opérations d'addition, de soustraction et/ou d'égalité à partir de ladite fréquence d'horloge ($F_E$), dudit incrément de fréquence ($F_H$) et de ladite fréquence intermédiaire ($F_I$), chacun de ces filtres fournissant undit signal de repérage de fréquence lorsqu'un signal qu'il reçoit passe par sa fréquence propre.

**8.** Réseau selon la revendication 7, caractérisé par le fait que lesdits filtres de repérage de fréquence comportent :
- ledit filtre d'hétérodynage (120) dont ladite fréquence propre est ladite fréquence intermédiaire ($F_I$),
- un filtre de recherche de canal (122) qui reçoit ledit signal de mélange de repérage et dont ladite fréquence propre est elle aussi égale à ladite fréquence intermédiaire, ledit circuit de commande (126) étant prévu pour rendre ladite fréquence d'émission égale à la fréquence aller d'un canal disponible en réponse auxdits signaux de repérage lorsqu'un dit message aller doit être émis par ledit terminal considéré,
- et un filtre de repérage de fréquence de réponse (123) dont la fréquence propre ($F_H - F_I$) est égale à la différence entre ledit incrément de fréquence ($F_H$) et ladite fréquence intermédiaire ($F_I$), ledit circuit de commande (126) étant prévu, lorsqu'un dit message aller est transmis sur une dite fréquence aller, pour accorder ledit oscillateur local (106) ou ledit émetteur (105) de manière à recevoir ou émettre ledit message retour sur une onde porteuse à une dite fréquence retour appartenant au même dit canal que ladite fréquence aller.

**9.** Réseau selon la revendication 1, caractérisé par le fait que ledit générateur d'accordage (400) émet deux ondes dont les fréquences sont des fréquences bornes aux deux extrémités d'une plage des fréquences (f min, f max) porteuses de réseau comportant lesdites fréquences permises.

**10.** Réseau selon la revendication 9, caractérisé par le fait que ledit générateur d'accordage (400) émet une dite onde d'accordage à une fréquence minimale (f min) et une onde d'accordage à une fréquence maximale (f max), chacune des ces fréquences étant à la fois une dite fréquence borne et une dite fréquence de base, ledit générateur de balayage (118) faisant balayer ladite plage des fréquences porteuses du réseau par la fréquence de balayage alternativement à partir de cette fréquence maximale et de cette fréquence minimale.

**Patentansprüche**

1. Fernmeldenetz mittels Lichtleitfasern und Frequenzmultiplexierung, wobei dieses Netz enthält
   - Anschlüsse, (100, 200), die Endgeräten zugeordnet sind, um die Nachrichtenübermittlung zwischen diesen Endgeräten zu ermöglichen, wobei jeder dieser Anschlüsse zeitweise im rufenden, zeitweise im gerufenen und zeitweise im Wartezustand sein kann und ein Anschluß im rufenden Zustand ist, wenn er eine informationstragende Nachricht aussenden will, die an einen gerufenen Anschluß in Form einer Modulation einer optischen Trägerwelle mit einer ersten Frequenz übermittelt werden soll, sodaß der rufende Anschluß dann als Sender wirkt, während der gerufene Anschluß (200) diese Nachricht empfangen kann und dann im Empfangszustand ist,
   - zwei Monomodelichtleitfasern für jeden dieser Anschlüsse, und zwar eine Sendefaser (102) und eine Empfangsfaser (101) für die Aussendung bzw. den Empfang der Nachrichten durch diesen Anschluß,
   - einen Sternkoppler, (300) der die von allen Anschlüssen über die Sendelichtleitfasern kommenden Trägerwellen empfängt und jede dieser Trägerwellen an alle Anschlüsse über die Empfangslichtleitfasern übermittelt, sodaß alle Trägerwellen von jedem Anschluß empfangen werden,
   - und einen Abstimmungsgenerator(400), der Abstimmungswellen aussendet, die ebenfalls von allen Anschlüssen empfangen werden, um eine Folge von erlaubten Frequenzen zu definieren, die zur Bildung einer "ersten" Frequenz in Rufrichtung gewählt werden können, sobald eine Nachricht in einer Rufrichtung übermittelt werden soll, so daß die rufenden und gerufenen Anschlüsse auf eine gemeinsame Frequenz abgestimmt werden, die dann als belegt gilt, während die nicht belegten erlaubten Frequenzen für die Übertragung anderer Nachrichten verfügbar bleiben,
   - wobei die verschiedenen Anschlüsse je ähnliche Elemente enthalten und zwar für einen betrachteten beliebigen Anschluß (100) folgende Elemente:
   - einen steuerbaren Sender (105) um eine Trägerwelle auf der Sendefaser auszusenden, wenn eine Nachricht von dem betrachteten Anschluß ausgesendet werden soll, und um diese Welle zu modulieren, wobei die Frequenz dieser Welle steuerbar ist und eine Sendefrequenz dieses Anschlusses bildet,
   - einen örtlichen Oszillator(106), um eine lokale Lichtwelle mit steuerbarer lokaler Frequenz zu liefern,
   - einen Heterodynmischer(107) mit zwei Eingängen, von denen einer als Empfangseingang(107A) die von den betrachteten Anschluß empfangenen Trägerwellen empfängt, wobei eine solche Welle eine Empfangswelle mit einer Empfangsfrequenz für diesen Anschluß bildet, wenn die von dieser Welle getragene Nachricht für diesen Anschluß bestimmt ist, und der andere als lokaler Eingang (107B) die lokale Welle empfängt und diese Welle mit den empfangenen Wellen mischt, wobei der Mischer einen Fotodetektor-Empfänger (108) aufweist, um insbesondere durch Mischen mit der Empfangswelle und durch Fotodetektion ein nicht-optisches Empfangs-Überlagerungssignal mit einer vorgegebenen Zwischenfrequenz ($F_I$) zu bilden, die Differenz zwischen der Empfangsfrequenz und der lokalen Frequenz ist,
   - ein Heterodynfilter (120), das auf die Zwischenfrequenz abgestimmt ist, um dieses Empfangs-Überlagerungssignal zu selektieren,
   - eine Demodulationsschaltung (121), um dieses Empfangs-Überlagerungssignal zu empfangen und zu demodulieren und um ein demoduliertes Signal zu liefern, das für die an den betreffenden Anschluß zu übermittelnde Nachricht, die von der Empfangswelle übertragen wurde, repräsentativ ist,
   - und eine Steuerschaltung(126), die an das dem betreffenden Anschluß zugeordnete Endgerät angeschlossen ist, um die zu übertragende Information zu empfangen, wobei diese Schaltung den Sender entsprechend steuert, um die Modulation der Trägerwelle durchzuführen, wenn der betreffende Anschluß sich im Sendemodus befindet, wobei diese Schaltung das demodulierte Signal empfängt und die empfangene Nachricht dementsprechend an das zugeordnete Endgerät übermittelt, wenn der entsprechende Anschluß im Empfangsmodus ist, wobei diese Schaltung die Sendefrequenz mit Hilfe der Abstimmungswellen steuert, wenn der betreffende Anschluß im Rufzustand und im Sendemodus ist, wobei diese Sendefrequenz unter den verfügbaren Frequenzen ausgewählt wird, während diese Schaltung die lokale Frequenz abhängig von der Empfangsfrequenz steuert, wenn der betreffende Anschluß sich im gerufenen Zustand und im Empfangsmodus befindet, so daß die Differenz zwischen dieser lokalen Frequenz und dieser Empfangsfrequenz gleich der vorgegebenen Zwischenfrequenz ist, **dadurch gekennzeichnet, daß** der betreffende Anschluß (100) weiter Mittel zur Frequenzinkrementierung (106 bis 108, 118, 120, 122 bis 126) aufweist, die in der Lage sind, Inkrementieroperationen durchzuführen, indem je eine optische Welle einer Frequenz erzeugt wird, die ein Frequenzinkrement ($F_H$) ausgehend von der Frequenz einer von diesem Anschluß empfangenen Welle bildet, wobei dieses Frequenzinkrement allen Anschlüssen gleich ist, so daß diese Inkrementieroperationen ausgehend von einer unteren Grenzfrequenz (f min), die ihrerseits durch die Abstimmungswellen definiert ist, eine regelmäßige Folge von zugelassenen Frequenzen ergibt, die durch dieses Frequenzinkrement voneinander getrennt sind, und wobei eine nächstfolgende zugelassene Frequenz ($F_k + 1$) durch eine solche Inkrementieroperation in dem betrachteten Anschluß ausgehend von der vorhergehenden zugelassenen Frequenz ($F_k$) definiert ist, die von einem anderen Anschluß benutzt wird,
  - wobei die Steuerschaltung (126) mit diesen Frequenzinkrementiermitteln zusammenwirkt, wenn der betrachtete Anschluß in den Sendemodus übergehen soll, um eine verfügbare Frequenz zu definieren, und dann die Sendefrequenz so steuert, daß sie der so definierten verfügbaren Frequenz gleich wird.

2. Netz nach Anspruch 1, dadurch gekennzeichnet, daß die Frequenzinkrementiermittel aufweisen:
  - einen Explorationsgenerator (106) zur Erzeugung einer Explorationswelle mit einer steuerbaren optischen Frequenz,
  - einen Durchstimmungsgenerator (118), der von der Steuerschaltung (126) gesteuert wird und seinerseits den Explorationsgenerator so steuert, daß er einen Frequenzbereich des Netzes mit der Frequenz der Explorationswelle überstreicht,
  - einen Inkrementiermischer (107), der einen Photodetektor-Empfänger (108) enthält, um einerseits die von dem betrachteten Anschluß (100) empfangenen Wellen und andererseits die Explorationswelle zu empfangen und um diese empfangenen Wellen mit der Explorationswelle so zu mischen, daß sich ein Durchstimm-Überlagerungssignal einer nicht-optischen Art mit Differenzialfrequenzen ergibt,
  - und ein System zur Frequenzerfassung (120, 122 bis 125), das Durchstimm-Überlagerungssignal empfängt und ein Frequenzerfassungssignal an die Steuerschaltung liefert, wenn die Frequenz dieses Überlagerungssignals durch mindestens eine typische Frequenz dieses Frequenzerfassungssystems läuft, die mit dem Frequenzinkrement verknüpft ist, so daß die Steuerschaltung ausgehend von diesen Erfassungssignalen eine Sendefrequenz so steuern kann, daß sie einer der verfügbaren Frequenzen gleich wird.

3. Netz nach Anspruch 2, dadurch gekennzeichnet, daß das System zur Frequenzerfassung (120, 122 bis 125) mindestens ein Frequenzfilter (120, 122, 123) und/oder einen Taktgeber (125) enthält, wobei eine Frequenz dieses Filters und/oder des Taktgebers eine typische Frequenz dieses Erfassungssystems bildet.

4. Netz nach Anspruch 2, dadurch gekennzeichnet, daß das Erfassungssystem (120, 122 bis 125) eine Gruppe von typischen Frequenzen besitzt, die aus mindestens einer Frequenz besteht und von der aus das Frequenzinkrement durch Additions-, Subtraktions- und/oder Frequenz-Gleichheitsoperationen definiert ist.

5. Netz nach Anspruch 4, dadurch gekennzeichnet, daß die Gruppe von typischen Frequenzen die Zwischenfrequenz ($F_I$) und den Abstand ($F_H - F_I$) zwischen dieser Zwischenfrequenz und dem Frequenzinkrement ($F_H$) enthält.

6. Netz nach Anspruch 2, dadurch gekennzeichnet, daß der Durchstimmwellengenerator und der Inkrementiermischer vom lokalen Oszillator (106) und dem Heterodynmischer (107) gebildet werden, wobei der betrachtete Anschluß (100) außerdem eine Gruppe von Richtkopplern (103, 104) aufweist, die von der Steuerschaltung (126) so gesteuert werden, daß die vom Sender (105) ausgesendete Welle entweder an den Empfangseingang (107A) des Heterodynmischers oder an die Sendefaser (102) gelangt und daß an diesen Eingang entweder die von dem betreffenden Anschluß empfangenen Wellen oder die von dem Sender ausgesendete Welle gelangt.

7. Netz nach Anspruch 3, in dem der gerufene Anschluß als Antwort auf eine Nachricht in der ersten Richtung eine Nachricht in Gegenrichtung absenden kann, die eine an den rufenden Anschluß zu übertragende Information in Form einer Modulation auf einer optischen Trägerwelle einer Gegenrichtungsfrequenz besitzt, so daß der gerufene Anschluß sich im Sendemodus befindet, während der rufende Anschluß sich im Empfangsmodus befindet, wobei die Frequenz in Gegenrichtung der Frequenz in der ersten Richtung in der Folge der zugelassenen Frequenzen benachbart ist, wobei diese Folge abwechselnd Frequenzen in der ersten Richtung und Frequenzen in der Gegenrichtung enthält und eine Folge von Kanalpaaren definiert, die je als zwei Frequenzen gebildet werden, nämlich einer Frequenz in der ersten Richtung für eine Nachricht in der ersten Richtung und eine Gegenrichtungsfrequenz für eine Rückmeldung als Antwort auf diese Nachricht in der ersten Richtung, wobei jedes Kanalpaar nur verfügbar ist, wenn seine Frequenzen in beiden Richtungen verfügbar sind, dadurch gekennzeichnet, daß das Erfassungssystem aufweist:

- einen Taktgeber (125), um ein Taktsignal einer Taktfrequenz zu liefern, die eine typische Frequenz ist und dem doppelten Frequenzinkrements entspricht,
- einen Erfassungsmischer (124), um dieses Taktsignal mit dem aus dem Heterodynmischer kommenden Signal zu mischen und ein Erfassungsmischsignal zu liefern,
- und Erfassungsfilter (120, 122, 123) mit den typischen Frequenzen, deren Werte durch Additions-, Subtraktions- und/oder Gleichheitsoperationen ausgehend von der Taktfrequenz ($F_E$), von der Inkrementfrequenz ($F_H$) und der Zwischenfrequenz ($F_I$) definiert sind, wobei jedes dieser Filter ein Frequenzerfassungsignal liefert, wenn ein empfangenes Signal durch seine typische Frequenz läuft.

8. Netz nach Anspruch 7, dadurch gekennzeichnet, daß die Frequenzerfassungsfilter aufweisen:
- das Heterodynfilter (120), dessen Eigenfrequenz gleich der Zwischenfrequenz ($F_I$) ist,
- ein Kanalpaarsuchfilter (122), daß das Erfassungsmischsignal empfängt und dessen Eigenfrequenz ebenfalls gleich der Zwischenfrequenz ist, wobei die Steuerschaltung (126) die Sendefrequenz an die Frequenz in der ersten Richtung eines verfügbaren Kanals aufgrund der Erfassungssignale angleichen kann, wenn eine Nachricht in der ersten Richtung von dem betreffenden Anschluß ausgesendet werden soll,
- und ein Filter zur Erfassung der Antwortfrequenz (123), dessen Eigenfrequenz ($F_H - F_I$) der Differenz zwischen dem Frequenzinkrement ($F_H$) und der Zwischenfrequenz ($F_I$) gleicht, wobei die Steuerschaltung (126) den lokalen Oszillator (106) oder den Sender (105) bei Übertragung einer Nachricht in der ersten Richtung auf einer Trägerwelle mit der ersten Frequenz so abstimmen kann, daß die Rückmeldung auf einer Trägerwelle mit einer zweiten Frequenz des Kanals in Gegenrichtung, der zum selben Kanalpaar wie der Kanal in der ersten Richtung gehört, empfangen oder ausgesendet werden kann.

9. Netz nach Anspruch 1, dadurch gekennzeichnet, daß der Abstimmungsgenerator (400) zwei Wellen aussendet, deren Frequenzen an den beiden Enden (f min, f max) eines Trägerfrequenzbereichs des Netzes mit den zugelassenen Frequenzen liegen.

10. Netz nach Anspruch 9, dadurch gekennzeichnet, daß der Abstimmungsgenerator (400) eine Abstimmungswelle mit einer unteren Grenzfrequenz (f min) und eine Abstimmungswelle mit einer oberen Grenzfrequenz (f max) aussendet, wobei jede dieser Frequenzen sowohl eine Anfangs- wie auch Endfrequenz ist, da der Abstimmungsgenerator (118) den Trägerfrequenzbereich des Netzes mit der Abstimmungsfrequenz abwechselnd ausgehend von der oberen Grenzfrequenz und der ausgehend von der unteren Grenzfrequenz überstreicht.

**Claims**

1. Optical fibre communication network using frequency multiplexing and comprising:
- terminals associated with peripheral devices to transmit data between the peripheral devices, each terminal sometimes calling, sometimes being called and sometimes being on standby, a calling terminal sending an outward message conveying data to be transmitted to a called terminal by modulating an optical carrier at an outward frequency, said calling terminal sending, said called terminal being adapted to receive said outward message and receiving,
- two monomode optical fibres for each of said terminals, namely a send fibre and a receive fibre for sending and receiving of said messages by said terminal, respectively,
- a star coupler for receiving said carriers from all said terminals via said send fibres and for transmitting each of said carriers to all said terminals via said receive fibres, so that all said carriers are received by each terminal, and
- a tuning generator sending tuning signals which are received by all said terminals to define a succession of permitted frequencies each of which may be selected as an outward frequency whenever an outward message must be transmitted so that said calling and called terminals are then tuned to the same frequency, which frequency is then busied, unoccupied frequencies remaining available for transmission of other messages,

- the various terminals respectively comprise similar elements, namely in any terminal:
- a sender which can be commanded to send a carrier on said send fibre when a message must be sent by the terminal in question and to modulate said carrier, the frequency of said carrier being controllable and constituting a send frequency of said terminal,
- a local oscillator for supplying a local optical wave at a controllable local frequency,
- a two-input heterodyne mixer receiving on a receive input said carriers received by the terminal in question, one such carrier constituting a receive carrier with a receive frequency for said terminal if the message conveyed by said carrier is to be transmitted to said terminal, said receiver further receiving said local optical wave on a local input and mixing it with said received carriers, said mixer having a photosensor receiver to form by mixing with said receive carrier and by photodetection a non-optical receive beat frequency at a predetermined intermediate frequency (IF) which is the difference between said receive and local frequencies,
- a heterodyne filter tuned to said intermediate frequency to select said receive beat signal,
- a demodulator to receive said receive beat frequency, to demodulate it and to supply a demodulated signal representative of data to be transmitted to the terminal in question and conveyed by said receive carrier, and
- a control circuit connected to said peripheral device associated with the terminal in question to receive said data to be transmitted therefrom and controlling said sender accordingly to apply said modulation to the carrier when the terminal in question is sending, said circuit receiving said demodulated signal and consequently transmitting said data received to said associated peripheral device if the terminal in question is receiving, said circuit controlling said send frequency with the aid of said tuning waves if the terminal in question is calling and sending, said sending frequency being chosen from said available frequencies and said circuit controlling said local frequency according to said receive frequency if the terminal in question is called and receiving so that the difference between said local frequency and said receive frequency is equal to said predetermined intermediate frequency,

said network being characterised in that said terminal (100) further comprises frequency incrementing means (106 to 108, 118, 120, 122 to 126) adapted to carry out incrementing operations each of which generates an optical wave at a frequency having a frequency increment ($F_H$) from the frequency of a wave received by said terminal, said frequency increment being common to the various terminals so that said incrementing operations define, on the basis of the base frequency ($F_{min}$) which is in turn defined by said tuning wave means, a regular succession of said permitted frequencies spaced by said frequency increment, a next permitted frequency ($F_{k+}1$) being defined by an incrementing operation of this kind performed in the terminal in question on a previous permitted frequency ($F_k$) busied by another terminal,

- said control circuit (126) cooperating with said frequency incrementing means if the terminal in question must switch to sending mode to define an available frequency, said circuit then causing said send frequency to be made equal to the available frequency so defined.

2. Network according to claim 1 characterised in that said frequency incrementing means comprise:

- a scanning generator (106) to generate a scanning wave at a controllable optical frequency,
- a scanning generator (118) controlled by said control circuit (126) and causing said scanning generator to scan the frequency of said scanning wave across the network frequency space,
- an incrementing mixer (107) having a photodetector receiver (108) to receive said waves received by the terminal in question (100) and said scanning wave and to mix said received waves with said scanning wave to form a non-optical scanning beat signal at differential frequencies, and
- a frequency marking system (120, 122 to 125) receiving said scanning beat signal and supplying a frequency marker signal to said control circuit when the frequency of said beat signal passes through at least one frequency specific to said frequency marking system and related to said frequency increment so as to enable said control circuit to cause a send frequency to be made equal to an available frequency on the basis of said marking signals.

3. Network according to claim 2 characterised in that said frequency marking system (120, 122 to 125) comprises at least one frequency filter (120, 122, 123) and/or one cock (125), a frequency of said filter and/or of said clock constituting a frequency specific to said marking system.

4. Network according to claim 2 characterised in that said marking system (120, 122 to 125) has its own group of frequencies comprising at least one frequency and on the basis of which said frequency increment is defined by frequency addition, subtraction and/or equality operations.

5. Network according to claim 4 characterised in that said group of specific frequencies includes said intermediate frequency $(F_I)$ and the interval $(F_H - F_I)$ between said intermediate frequency and said frequency $(F_H)$.

6. Network according to claim 2 characterised in that said scanning wave generator and said incrementing mixer comprise said local oscillator (106) and said heterodyne mixer (107), said terminal in question (100) further comprises a group of directional couplers (103, 104) controlled by said control circuit (126) to enable said circuit to direct the wave emitted by said sender (105) either to said receive input (107A) of the heterodyne mixer or to said send fibre (102) and to direct to said input either said waves received by the terminal in question or the wave emitted by said sender.

7. Network according to claim 3 characterised in that said called terminals adapted to send in response to said outward message a return message containing further data to be transmitted to the calling terminal in the form of a modulated optical carrier at a return frequency, said called terminal being then in sending mode, and said calling terminal being thereafter adapted to receive said return message, said calling terminal then being in receive mode, and wherein said return frequency is adjacent said outward frequency in said succession of permitted frequencies which comprises said outward frequencies alternating with said return frequencies and simultaneously constituting a succession of channels each consisting of two frequencies, namely an outward frequency for an outward message and a return frequency for a return message sent in response to said outward message, each channel being available only when both its outward and return frequencies are available, said network being characterised in that said marking system comprises:
- a clock (125) to supply a clock signal at a clock frequency which is one of said specific frequencies and which is equal to twice said frequency increment,
- a marker mixer (124) for mixing said clock signal with a signal from said heterodyne mixer and supplying a marking mix signal, and
- marking filters (120, 122, 123) at said specific frequencies the values of which are defined by addition, subtraction and/or equality operations on said clock frequency $(F_E)$, said frequency increment $(F_H)$ and said intermediate frequency $(F_I)$, each of said filters supplying a frequency marker signal when a signal it receives passes through its specific frequency.

8. Network according to claim 7 characterised in that said frequency marker filters comprise:
- said heterodyne filter (120) whose specific frequency is said intermediate frequency $(F_I)$,
- a channel search filter (122) which receives said marking mix signal and whose specific frequency is also equal to said intermediate frequency, said control circuit (126) being adapted to make said send frequency equal to the outward frequency of an available channel in response to said marker signals when an outward message must be sent by the terminal in question, and
- a response frequency marker filter (123) whose specific frequency $(F_H - F_I)$ is equal to the difference between said frequency increment $(F_H)$ and said intermediate frequency $(F_I)$, said control circuit (126) being adapted when an outward message is transmitted on an optical carrier at an outward frequency to tune said local oscillator (106) or said sender (105) in order to receive or send said return message on a carrier at a return frequency of the same channel as said outward frequency.

9. Network according to claim 1 characterised in that said tuning generator (400) outputs two waves whose frequencies are limit frequencies at opposite ends of a range of carrier frequencies (f min, f max) of the network including said permitted frequencies.

10. Network according to claim 9 characterised in that said tuning generator (400) sends a tuning wave at a minimal frequency (f min) and a tuning wave at a maximal frequency (f max) each of which frequencies is both a limit frequency and a base frequency, said scanning generator (118) causing said network carrier frequency range to be scanned by the scanning frequency alternately from said maximal frequency and said minimal frequency.

# FIG. 1

$F_H$   $F_H$

Q1   Q2   Q.M

f min   f max   f

# FIG. 2

T9   T8

$F_I - F_H$   $F_I$   f

# FIG. 3

# FIG. 5

# FIG. 4

EP 0 381 102 B1

FIG. 6

EP 0 381 102 B1

# FIG. 7

# FIG. 8

FIG. 9A

FIG. 9B

$f_{max}$

$f_{min}$

R1
A1

FIG. 9C

FIG. 10

FIG. 11

EP 0 381 102 B1

FIG. 12

FIG. 13

EP 0 381 102 B1

FIG. 14

EP 0 381 102 B1

FIG. 15

EP 0 381 102 B1

FIG. 16

FIG. 17

EP 0 381 102 B1

## FIG. 18

EP 0 381 102 B1